# EUROPÄISCHE PATENTSCHRIFT

(11) **EP 2 919 588 B1**
(45) Veröffentlichungstag und Bekanntmachung des Hinweises auf die Patenterteilung: **04.01.2017**
(21) Anmeldenummer: 12794220.9
(22) Anmeldetag: 15.11.2012
(51) Int. Cl.: B65G 47/76, A22C 17/00

(54) **BEARBEITUNGSVORRICHTUNG SOWIE VERFAHREN ZUM BEARBEITEN VON IN EINEM PRODUKTSTROM GEFÖRDERTEN NAHRUNGSMITTELPRODUKTEN**
INSTALLATION AND METHOD FOR PROCESSING FOOD PRODUCTS CONVEYED IN A PRODUCT FLOW
INSTALLATION ET PROCÉDÉ POUR TRAITER DES PRODUITS ALIMENTAIRES TRANSPORTÉS DANS UN FLUX DE PRODUITS

(43) Veröffentlichungstag der Anmeldung: 23.09.2015
(73) Patentinhaber: Nordischer Maschinenbau Rud. Baader GmbH + Co. KG, 23560 Lübeck (DE)
(72) Erfinder: PEDERSEN, Henning B., DK-7430 Ikast (DK)
(74) Vertreter: Stork Bamberger
(86) Internationale Anmeldenummer: PCT/EP2012/072779
(87) Internationale Veröffentlichungsnummer: WO 2014/075731

(56) Entgegenhaltungen:
- EP-A1- 2 353 392
- WO-A1-2005/008192
- WO-A1-2011/138052
- US-A1- 2005 186 896
- US-A1- 2010 051 513

## Beschreibung

Die Erfindung betrifft eine Nahrungsmittel-Bearbeitungsvorrichtung, umfassend ein Nahrungsmittelprodukte in einem Produktstrom entlang eines Hauptförderwegs förderndes Hauptfördermittel sowie ein bearbeitete Nahrungsmittelprodukte entlang eines Abförderweges abförderndes Abfördermittel und wenigstens eine Bearbeitungsstation, die einen seitlich neben dem Hauptförderweg angeordneten Bearbeitungsplatz aufweist, mit einem Entnahmemittel, das zu bearbeitende Nahrungsmittelprodukte von einem Entnahmeabschnitt des Hauptförderweges aus dem Produktstrom entnimmt und über einen Entnahmeweg quer zu dem Hauptförderweg an den Bearbeitungsplatz gibt, sowie mit einem Abgabemittel, das an dem Bearbeitungsplatz bearbeitete Nahrungsmittelprodukte über einen Abgabeweg an einen Abgabeabschnitt des Abförderweges abgibt.

Die Erfindung bezieht sich auch auf ein Verfahren, gestaltet zum Bearbeiten von in einem Produktstrom längs eines Hauptförderweges geförderten Nahrungsmittelprodukten, die insbesondere mittels wenigstens einer erfindungsgemäßen Nahrungsmittel-Bearbeitungsvorrichtung bearbeitet werden, wobei ausgewählte Nahrungsmittelprodukte an wenigstens einer Bearbeitungsstation mittels eines maschinellen Entnahmemittels über einen quer zu dem Hauptförderweg gerichteten Entnahmeweg dem Hauptförderweg entnommen und zu einem zu der Bearbeitungsstation zugehörigen Bearbeitungsplatz bewegt und dort bearbeitet werden und dann die bearbeiteten Nahrungsmittelprodukte zu einem Abförderweg mittels eines maschinellen Abgabemittels über einen Abgabeweg bewegt werden.

Es handelt sich um eine Nahrungsmittel-Bearbeitungsvorrichtung und ein Verfahren auf dem Gebiet der Bearbeitung von Fisch-, Geflügel- oder anderen Fleischprodukten. Ein solches Nahrungsmittelprodukt wird dem Produktstrom entnommen, um es am Bearbeitungsplatz z. B. zu zerlegen, zu schneiden, zu portionieren, zu entbeinen, zu filetieren, zu trimmen oder dergleichen. Zumeist umfasst die Vorrichtung an wenigstens einer Längsseite des Hauptförderweges eine Mehrzahl Bearbeitungsstationen. Insbesondere ist die Bearbeitungsvorrichtung mit einer rechnerbetriebenen Steuereinrichtung ausgestattet, die die Verteilung von Nahrungsmittelprodukten, die dem Produktstrom entlang des Hauptförderweges zu entnehmen sind, an die Bearbeitungsplätze der Bearbeitungsstationen sowie auch den Transport zu anderen Stationen zum Beispiel zur Qualitätsprüfung, zum Wiegen und/oder zum Sortieren und/oder Verpacken steuert. Derartige bekannte Steuereinrichtungen erfassen die Produkte und verfolgen den Produktweg. Insbesondere betätigen sie jeweils das Entnahmemittel und indizieren die Abgabe, und zwar insbesondere in Abhängigkeit von Attributen oder Parametern wie Gewicht, Länge, Größe, Farbe, Substanz, Zusammensetzung und Qualität hinsichtlich zum Beispiel Optimierung des Betriebs der Bearbeitungsvorrichtung, Ausbeute und Bildung von Produktgruppen. Bei den Abläufen kommt es darauf an, dass die Nahrungsmittelprodukte mit dem Entnahmemittel bzw. dem Abgabemittel dem Produktstrom mit Zuordnung zu wenigstens einer Bearbeitungsstation gezielt und zuverlässig entnommen sowie, nach Bearbeitung, abgegeben werden. Dabei erfolgt die Bearbeitung an dem oder jedem Bearbeitungsplatz zumeist manuell.

Zum Stand der Technik sind Nahrungsmittel-Bearbeitungsvorrichtungen z. B. aus WO 2011/138052 A1 und - gattungsgemäß - aus EP 2 353 392 A1 bekannt. Nahrungsmittelprodukte werden auf einem Hauptfördermittel, nämlich auf einem Förderband liegend, gefördert, wobei sie entweder eine oder mehrere Bearbeitungsstationen ohne Bearbeitung passieren oder dort mittels eines zugehörigen Schwenkarms entnommen und zu einem zugehörigen Bearbeitungsplatz gefördert werden. Zur Entnahme wird der Schwenkarm derart geschwenkt, dass er auf dem Hauptfördermittel einen Entnahmeabschnitt erfasst und von diesem durch Einschwenken wenigstens ein Nahrungsmittelprodukt auf einen Arbeitstisch schiebt. Das Nahrungsmittelprodukt wird dort bearbeitet, und das bearbeitete Produkt wird von Hand auf das Hauptfördermittel zurückgegeben. Die Zurückgabe erfolgt auf einen zur Abgabe freien Abgabeabschnitt des Hauptfördermittels. Der freie Abgabeabschnitt folgt in Förderrichtung (stromabwärts) dem Entnahmemittel in einiger Distanz. Die Entnahme und Rückgabe (Abgabe), wie sie bekannt sind, umfassen entweder nur den Schwenkarm zum Entnehmen, oder, davon distanziert, auch ein stromabwärts vorgesehenes Förderelement als mit einer Waage ausgestattetes Abgabemittel. Eine Computer-Steuerung der bekannten Bearbeitungsvorrichtung muss so eingerichtet sein, dass ein freier Abschnitt zur Abgabe, von der Entnahme maschinell und funktionell besonders getrennt, indiziert wird, z. B. durch eine visuelle Anzeige für eine Bedienperson.

Ziele der Erfindung sind es, dass die Entnahmeförderung (Produktentnahme zur Bearbeitung) sowie die Abgabeförderung (Rückgabe/Abgabe eines bearbeiteten Produkts an ein Abfördermittel) vereinfacht werden, und zwar insbesondere hinsichtlich einer kompakten, die Entnahme und Abgabe erfassenden Aggregatanordnung. Die einfach bauende Anordnung soll zur Kosteneinsparung führen und sie soll auch Vorteile hinsichtlich einer einfachen, Hygieneanforderungen genügenden Reinigung sowie hinsichtlich einer Reduzierung von Maßnahmen zur Entnahme-/Abgabesteuerung mit sich bringen.

Die erfindungsgemäßen Ziele werden in Verbindung mit den Merkmalen der eingangs genannten Nahrungsmittel-Bearbeitungsvorrichtung dadurch erreicht, dass ein Querfördermittel mit einer für das Entnahmemittel und das Abgabemittel gemeinsamen Schwenkachse eingerichtet ist, um die das Entnahmemittel sowie das Abgabemittel durch Schwenkbewegung zur Entnahme und Abgabe der genannten Nahrungsmittelprodukte hin und her bewegbar sind, und dass ein Abgabe-Pufferabschnitt eingerichtet ist, der zur Aufnahme von den bearbeiteten, zur Abgabe an den Abgabeabschnitt bestimmten Nahrungsmittelprodukten ausgebildet ist und der dem um die gemeinsame Querfördermittel-Schwenkachse schwenkbaren Abgabemittel zugeordnet ist, wobei das um die gemeinsame Querfördermittel-Schwenkachse schwenkbare Entnahmemittel zu der Entnahme der Nahrungsmittelprodukte den Entnahmeabschnitt und das um die gemeinsame Querfördermittel-Schwenkachse schwenkbare Abgabemittel zu der Abgabe der Nahrungsmittelprodukte an den Abgabeabschnitt den Abgabe-Pufferabschnitt erfasst.

Die Ziele werden in Verbindung mit den Merkmalen des eingangs genannten Verfahrens dadurch erreicht, dass das Entnahmemittel und das Abgabemittel zum Ausführen einer Entnahmeförderung und einer Abgabeförderung der genannten Nahrungsmittelprodukte um eine gemeinsame Querfördermittel-Schwenkachse eines Querfördermittels hin und her bewegt werden, wobei die bearbeiteten Nahrungsmittelprodukte vor dem Ausführen der genannten Abgabeförderung in einen Abgabe-Pufferabschnitt gegeben werden, von dem sie durch Ausführung der Abgabeförderung mittels des Abgabemittels dem Abförderweg zugeführt werden.

Erfindungsgemäß erreicht man mit der gemeinsamen Querfördermittel-Schwenkachse für das maschinelle Entnahmemittel und das maschinelle Abgabemittel eine kompakte Bauform und Anordnung, die zu Kosteneinsparrungen führt und besonders einfach, auch besonderen Hygieneanforderungen genügend, zu reinigen ist. Die Steuerung des Entnahmemittels und des Abgabemittels lässt sich vereinfachen und/oder optimieren. Die Einrichtung und Anordnung der gemeinsamen Querfördermittel-Schwenkachse führen dazu, dass mit Einleitung und infolge der Entnahme ein Zeitabschnitt bzw. ein zugehöriger freier Abförderweg entstehen, die zur Abgabe mit Bezug zu und in Verbindung mit dem Entnahmevorgang zur Verfügung stehen. Es handelt sich um eine Kopplung der Entnahme und der Abgabe, die den Entnahme- und Abgabeverlauf optimiert.

Das Entnahmemittel und das Abgabemittel können vielfältig gestaltet sein. Erforderlich ist, dass diese Mittel um die gemeinsame Querfördermittel-Schwenkachse derart schwenkbar sind, dass jeweils Endpositionen der Schwenkbewegung den Entnahmeweg bzw. den Abgabeweg bestimmen und/oder begrenzen. Das Entnahmemittel und das Abgabemittel sind derart eingerichtet und ausgebildet, dass sie wenigstens ein genanntes Nahrungsmittelprodukt auf dem Entnahmeabschnitt zur Entnahme bzw. auf dem Abgabe-Pufferabschnitt zur Abgabe erfassen und jedenfalls zunächst quer zur Richtung des in die Bearbeitungsvorrichtung auf dem Hauptförderweg einlaufenden Produktstroms bis zum Ende des Entnahmewegs bzw. des Abgabewegs bewegen. Diese Querförderungen der Nahrungsmittelprodukte werden durch das Hin- und Herbewegen, nämlich durch Schwenkbewegung des Entnahmemittels und des Abgabemittels um die gemeinsame Querfördermittel-Schwenkachse bewirkt. Unter Querförderung wird allgemein eine Förderung verstanden, die Nahrungsmittelprodukte zum Entnehmen bzw. zur Abgabe in einen bzw. aus einem Bereich längsseitig neben dem Förderweg bewegt. Besonders vorteilhaft werden das Entnahmemittel und das Abgabemittel durch wenigstens ein Betätigungselement gebildet, das durch ein um die gemeinsame Querfördermittel-Schwenkachse hin und her schwenkbares Armelement gebildet ist. Dieses Armelement weist die Eigenschaften eines einarmigen Hebels oder Schwenkarms auf, der Produkte weg wischt oder schiebt. Die Querfördermittel-Schwenkachse, die ein solches Armelement anlenkt, wird auf der stromabwärts gelegenen Seite der Bearbeitungsstation angeordnet. Anstelle eines Armelements können z. B. andere gleichwirkende Schwenk-Betätigungselemente wie Klappen, Schaufeln oder dergleichen schwenkanlenkbare, durch das Schwenken eine Förderung bewirkende Elemente vorgesehen werden.

Ein Längsfördermittel, nämlich das Hauptfördermittel und/oder das Abfördermittel, können in gerader Linie durch ein Förderband oder aneinandergereihte Förderbänder mit geeigneten Übergabestellen gebildet sein. Auf einem solchen Band-Fördermittel liegt das Nahrungsmittelprodukt auf. Es wird von einer Bandfläche mittels des schwenkbaren Entnahmemittels abgenommen, insbesondere abgeschoben und auf eine Abförder-Bandfläche mittels des schwenkbaren Abgabemittels aufgeschoben oder sonst wie aufgebracht.

Man erkennt, dass die gemeinsame Querfördermittel-Schwenkachse insbesondere senkrecht zur Förderfläche oder Förderebene des passierenden Fördermittels und stets derart ausgerichtet ist, dass das Entnahmemittel und das Abgabemittel durch Schwenkbewegung um die gemeinsame Fördermittel-Schwenkachse quer zur Richtung des Hauptförderweges bzw. des Abförderweges bewegt werden. Diese Schwenkbewegung schließt grundsätzlich ein, dass das Entnahmemittel und das Abgabemittel gegensinnig um die gemeinsame Querfördermittel-Schwenkachse schwenkbar sind.

Der Abgabe-Pufferabschnitt ist durch einen statischen Vorhalte- oder Speicherraum bestimmt, in den das oder die bearbeiteten Nahrungsmittelprodukte gegeben werden, um dann dort mittels des Abgabemittels erfasst und in der Folge an den Abgabeabschnitt des Abfördermittels bewegt zu werden. Der Abgabe-Pufferabschnitt wirkt mit dem Abgabemittel zusammen.

Das Entnahmemittel und das Abgabemittel des erfindungsgemäßen Querfördermittels sind bevorzugt und besonders vorteilhaft so ausgebildet und angeordnet, dass sich der Entnahmeweg und der Abgabeweg wenigstens teilweise räumlich überlappen. So lassen sich die Entnahmeförderung und die Abgabeförderung auf engstem Raum gestalten und miteinander koordinieren.

Eine besondere Ausgestaltung besteht darin, dass das Entnahmemittel und das Abgabemittel durch ein einziges um die Querfördermittel-Schwenkachse hin und her schwenkbares Betätigungselement gebildet sind, das in Hinbewegung das Entnahmemittel und in Rückbewegung das Abgabemittel bildet. Besonders vorteilhaft ist das einzige Betätigungselement so angeordnet und eingerichtet, dass es beim Hin- und Herschwenken auf ein und derselben Erfassungsebene schwenkt, nämlich in einer Ebene, in der sowohl zu bearbeitende Nahrungsmittelprodukte als auch die bearbeiteten Nahrungsmittelprodukte erfasst werden. Das einzige Betätigungselement kann aber auch relativ zu dem Hauptförderweg und zu dem Abförderweg höhenverstellbar angeordnet sein, wobei es in einem ersten Höhenniveau das Entnahmemittel und in einem zweiten Höhenniveau das Abgabemittel bildet und dementsprechend betrieben wird.

Eine andere Ausgestaltung besteht darin, dass das Entnahmemittel und das Abgabemittel durch zwei getrennte, um die gemeinsame Querfördermittel-Schwenkachse hin und her schwenkbare Betätigungselemente gebildet sind, nämlich durch ein Entnahme-Betätigungselement, das wenigstens einem ersten Höhenniveau zugeordnet ist, sowie durch ein Abgabe-Betätigungselement, das wenigstens einem zweiten Höhenniveau zugeordnet ist. Wenigstens ein erstes Höheniveau entspricht der Höhe des Hauptförderweges. Wenigstens ein zweites Höhenniveau kann dem Höhenniveau eines von dem Hauptförderweg getrennten Abförderwegs entsprechen. Das zweite Höhenniveau kann auch dem Höhenniveau eines Abgabe-Pufferabschnitts entsprechen, der zum Beispiel in einem Höhenniveau über einem Abförderweg angeordnet ist.

Insbesondere können das Entnahme-Betätigungselement und das Abgabe-Betätigungselement gemeinsam, nämlich in drehfester Verbindung miteinander, um die Fördermittel-Schwenkachse hin- und herschwenkbar sein. Das Entnahme-Betätigungselement und das Abgabe-Betätigungselement können aber auch getrennt voneinander, nämlich jeweils mit selbstständiger Drehbewegung um die Fördermittel-Schwenkachse, hin- und herschwenkbar sein.

Gemäß einer Anordnung des erfindungsgemäßen Querfördermittels kann der Abförderweg Bestandteil des Hauptförderweges sein. Eine besonders vorteilhafte Gestaltung einer solchen Anordnung besteht darin, dass der Entnahmeweg einen außerhalb des Hauptförderweges zwischen diesem und dem Bearbeitungsplatz gelegenen Durchgangsabschnitt aufweist, der wenigstens teilweise auch den Abgabe-Pufferabschnitt bildet. Eine besonders kompakte Anordnung zeichnet sich dadurch aus, dass der Entnahmeabschnitt, der Durchgangsabschnitt mit dem Abgabe-Pufferabschnitt und der Abgabeabschnitt des Abförderweges in zum Hauptförderweg quer gerichteter Reihe angeordnet sind.

Um insbesondere besonderen Hygieneanforderungen gerecht zu werden, besteht eine andere erfindungsgemäße Gestaltung darin, dass der Abförderweg ein von dem Hauptförderweg getrennter Weg ist, wobei der Hauptförderweg und der Abförderweg in unterschiedlichen Höhenebenen liegen.

Allgemein kann der Abgabe-Pufferabschnitt der erfindungsgemäßen Vorrichtung besonders raumsparend angeordnet werden. Eine besondere Gestaltung besteht darin, dass die Fördermittel-Schwenkachse seitlich neben dem Abförderweg zu diesem mit einem Abstand angeordnet ist, dem die Dimension eines Raums entspricht, in dem wenigstens ein Teil des Abgabe-Pufferabschnitts eingerichtet ist.

Eine Ausgestaltung besteht darin, dass der Abgabe-Pufferabschnitt mit einem den Abgabeweg verlängernden Abgabeteil ausgebildet ist, das von dem Abgabe-Pufferabschnitt mittels des Abgabemittels abgeförderte Nahrungsmittelprodukte aufnimmt. Mittels dieses Abgabeteils können an den Abgabeabschnitt des Abförderweges abzugebende Nahrungsmittelprodukte während wenigstens einer Anfangsphase der Betätigung des Entnahmemittels zeitlich vor der Abgabe an den Abgabeabschnitt gehalten und damit zwischengespeichert werden. Vorteilhaft ist das Abgabeteil, zweckmäßig ein Bodenteil, in wenigstens zwei Positionen setzbar, die Schwenkpositionen des Entnahmemittels bzw. des Abgabemittels entsprechen. Vorteilhaft ist dann das Abgabeteil drehfest mit dem Entnahmemittel verbunden. Eine Gestaltung besteht darin, dass das Abgabeteil in einer Anfangsposition (Grundposition) des Entnahmemittels zumindest im Wesentlichen von einer Fläche des Abgabe-Pufferabschnitts überdeckt ist, während das Abgabeteil in einer Endposition (Umkehrposition) des Entnahmemittels einen Halteabschnitt bildet, der den Abgabe-Pufferabschnitt verlängert und von dem Abgabemittel nicht erfasst wird, wobei eine Übergangsstelle zwischen dem Abgabe-Pufferabschnitt und dem herausgeschwenkten Abgabeteil einen Rückhalterand zur Abgabe der bearbeiteten Nahrungsmittelprodukte von dem Abgabeteil aufweist. Der Rückhalterand ist derart, dass die Nahrungsmittelprodukte beim Zurückschwenken des Entnahmemittels in seine Anfangsposition und des Abgabeteils in seine verdeckte Position wenigstens zum Teil gegen den Rückhalterand gelangen und infolgedessen von dem zurückschwenkenden Abgabeteil abgeschoben werden.

Das Entnahmemittel und/oder das Abgabemittel können zur Höheneinstellung auf unterschiedliche Höhenniveaus relativ zu dem Hauptförderweg und/oder zu dem Abförderweg höhenverstellbar eingerichtet sein. Man erreicht Betrieb und/oder Anpassung für unterschiedliche Höhenniveaus von Hauptförderweg und Abförderweg. Auch der Pufferabschnitt kann zu Höheneinstellung auf unterschiedliche Höhenniveaus relativ zu dem Hauptförderweg und/oder zu dem Abförderweg höhenverstellbar ausgebildet sein. Zum Beispiel erreicht man, dass sich der Abgabe-Pufferabschnitt zum Aufnehmen von bearbeiteten Nahrungsmittelprodukten in einem ersten Höhenniveau befindet, während er bei seinem Erfassen mittels des Abgabemittels eine zweite Höhenposition einnimmt. Weiterhin kann vorgesehen sein, dass der gesamte Abgabe-Pufferabschnitt mit oder ohne Höhenverstellung quer zu dem Hauptförderweg bzw. dem Abförderweg in wenigstens zwei fixe Position bewegbar ist.

An dieser Stelle wird darauf aufmerksam gemacht, dass ganz allgemein der Hauptförderweg auch in unterschiedlichen Höhenniveaus verlaufen kann. Zum Beispiel kann das Hauptfördermittel in Bezug auf zwei oder mehr Bearbeitungsplätze einer Bearbeitungsvorrichtung mit unterschiedlichen Transporthöhen eingerichtet sein. Entsprechendes trifft für den Abförderweg zu. Insbesondere können Abfördermittel, die jeweils nur einer Bearbeitungsstation zugeordnet sind, unterschiedliche Transporthöhen aufweisen.

Vorteilhaft kann der Abgabe-Pufferabschnitt zusätzlich zu seiner Eigenschaft, dass er von dem Abgabemittel zur Abgabe der Nahrungsmittelprodukte erfassbar ist, als Mess-Abschnitt derart ausgebildet sein, dass ihm eine Messeinrichtung zugeordnet ist, die wenigstens ein Attribut, insbesondere das Gewicht, jedes bearbeiteten, in dem Abgabe-Pufferabschnitt zu liegen kommenden Nahrungsmittelprodukts erfasst.

Eine Ausgestaltung besteht darin, dass die Bearbeitungsvorrichtung eine Steuereinrichtung umfasst, die zum Erfassen der Belegung des Abgabe-Pufferabschnitts einer genannten zugehörigen Bearbeitungsstation mit wenigstens einem abzugebenden Nahrungsmittelprodukt eingerichtet ist und die das Entnahmemittel und das Abgabemittel, die beide um die gemeinsame Schwenkachse schwenkbar sind, in Abhängigkeit von dem Auftreten eines der Bearbeitungsstation zum Bearbeiten zugeordneten genannten Nahrungsmittelprodukts zu der Entnahme und zu der Abgabe betätigt. Insbesondere wird ein erfindungsgemäß in Verbindung mit der Entnahme erzeugter freier Abgabe-Förderraum besonders wirksam, insbesondere steuerungstechnisch vorteilhaft, genutzt. Während der Einleitung, nämlich einer Anfangsphase, und/oder der anschließenden Durchführung der Entnahme erfolgt zeitgleich eine Abgabe der bearbeiteten Nahrungsmittelprodukte von dem Abgabe-Pufferabschnitt. Insbesondere in dem Fall, dass das Hauptfördermittel auch das Abfördermittel bildet, kommt eine dritte Funktion hinzu, indem nämlich das über das Hauptfördermittel schwenkende Entnahmemittel durch den Vorgang der Herausnahme des Nahrungsmittelprodukts aus dem Produktstrom, d. h. durch eine Art Sperrung, stromabwärts einen freien Abgabeabschnitt auf dem Abfördermittel bewirkt.

Vorteilhaft umfasst eine Steuereinrichtung der Bearbeitungsvorrichtung eine Steuerung, die das Entnahmemittel und das Abgabemittel, nämlich insbesondere deren Antrieb um die gemeinsame Querfördermittel-Schwenkachse steuert. Im Übrigen ist die Vorrichtungs-Steuereinrichtung vorteilhaft als an sich bekanntes computerbetriebenes Steuermittel gestaltet und ausgelegt, das in Kombination mit Sensoren, Messeinrichtungen und/oder Kennungen die Wege der Produkte in jeder Form und vorteilhaft nach jeder Änderung erfasst und verfolgt, und zwar insbesondere nach Maßgabe von Attributen oder Parametern wie Gewicht, Länge, Größe, Farbe, Substanz, Zusammensetzung, Struktur, Qualität etc.

Das erfindungsgemäße Verfahren kann mit einer Reihe von vorteilhaften, nachstehend fakultativ angegebenen Verfahrensgestaltungen durchgeführt werden.

Eine zur Steuerung besonders geeignete Maßnahme besteht gemäß einer Verfahrensgestaltung darin, dass an wenigstens einer genannten Bearbeitungsstation die Abgabe von wenigstens einem genannten bearbeiteten Nahrungsmittelprodukt an den Abförderweg des Abfördermittels mit der Entnahme eines genannten Nahrungsmittelprodukts von dem Hauptförderweg derart gekoppelt und koordiniert wird, dass die Abgabeförderung mittels Schwenkbewegung des Abgabemittels um die gemeinsame Querfördermittel-Schwenkachse dann durchgeführt wird, wenn die Entnahmeförderung mittels Schwenkbewegung des Entnahmemittels um die gemeinsame Querfördermittel-Schwenkachse für wenigstens ein bestimmtes genanntes Nahrungsmittelprodukt durchgeführt wird, wobei die Abgabeförderung in wenigstens einer Phase der Entnahmeförderung, gegebenenfalls einschließlich einer Einleitung der Entnahme, erfolgt. Die Abförderung kann aber auch, durch die Entnahme ausgelöst, danach erfolgen.

Besonders vorteilhaft werden die Entnahmeförderung und die Abgabeförderung der Nahrungsmittelprodukte in einem Raumbereich durchgeführt, in dem der Entnahmeweg und der Abgabeweg wenigsten teilweise einander überlappen. Vorteilhaft werden die Entnahmeförderung und die Abgabeförderung der Nahrungsmittelprodukte derart ausgeführt, dass sich der Entnahmeweg und der Abgabeweg auf ein und demselben Höhenniveau in einem den beiden Wegen gemeinsamen Überlappungsabschnitt überlappen. Vorteilhaft werden die bearbeiteten Nahrungsmittelprodukte in einen genannten Abgabe-Pufferabschnitt gegeben, der sich wenigstens teilweise in einem Überlappungs-raumbereich des Entnahmeweges und des Abgabeweges befindet.

Eine bevorzugte Maßnahme besteht weiterhin darin, dass die Schwenkbewegungen des Entnahmemittels zur Entnahme und des Abgabemittels zur Abgabe der Nahrungsmittelprodukte um die gemeinsame Fördermittel-Schwenkachse in einem gemeinsamen Drehwinkelbereich gegensinnig durchgeführt werden.

Eine Verfahrensmaßnahme kann darin bestehen, dass das Entnahmemittel in eine dem Abschluss der Entnahmeförderung der Nahrungsmittelprodukte zugeordnete Ruheposition gebracht wird, zwischen der und dem Abförderweg ein den Abgabe-Pufferabschnitt umfassender Raum entsteht.

Eine weitere Maßnahme der Verfahrensgestaltung besteht darin, dass die bearbeiteten, im Abgabe-Pufferabschnitt befindlichen Nahrungsmittelprodukte mittels eines verlängerten Abgabewegs nach dem Beginn oder nach einer Einleitungsphase der Entnahmeförderung, jedoch vor derem Ende, zeitlich verzögert an den Abförderweg gegeben werden. In Abhängigkeit von der Entnahmeförderung kann die Abförderung auch nach dem Ende der Entnahmeförderung erfolgen.

Zum insbesondere steuerungstechnisch oder auch nur zeitlich besonders günstigen Betrieb ist es von besonderem Vorteil, wenn das Entnahmemittel und das Abgabemittel wenigstens in einem gmeinsamen Zeitabschnitt um die gemeinsame Querfördermittel-Schwenkachse geschwenkt werden. Im Bedarfsfall können die Schwenkbewegungen des Entnahmemittels und des Abgabemittels um die gemeinsame Querfordermittel-Schwenkachse auch wenigstens teilweise zeitversetzt durchgeführt werden.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und -möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als unabhängiges Detailbeispiel für andere nicht oder nicht vollständig beschriebene, unter die Erfindung fallende Ausführungen und Gestaltungen zu verstehen.

Es zeigen
- Fig. 1: in Draufsicht eine erfindungsgemäße Nahrungsmittel-Bearbeitungsvorrichtung mit mehreren Bearbeitungsstationen gemäß einem ersten Ausführungsbeispiel,
- Fig. 2: in Draufsicht und vergrößerter Darstellung eine Bearbeitungsstation einer Fig. 1 entsprechenden Bearbeitungsvorrichtung,
- Fig. 3: in Draufsicht vier Momentdarstellungen von zwei gegenüberliegenden Bearbeitungsstationen der Vorrichtung in Fig. 1,
- Fig. 4: in axonometrischer Ansicht eine erfindungsgemäße Nahrungsmittel-Bearbeitungsvorrichtung im Bereich einer Bearbeitungsstation gemäß einem zweiten Ausführungsbeispiel,
- Fig. 5: in axonometrischer Ansicht eine Ausgestaltung eines Abgabe-Pufferabschnitts, der insbesondere an die Stelle eines in Fig. 4 dargestellten Abgabe-Pufferabschnitts gesetzt werden kann, und
- Fig. 6: in axonometrischer Ansicht ein drittes Ausführungsbeispiel der erfindungsgemäßen Nahrungsmittel-Bearbeitungsvorrichtung im Bereich einer Bearbeitungsstation.

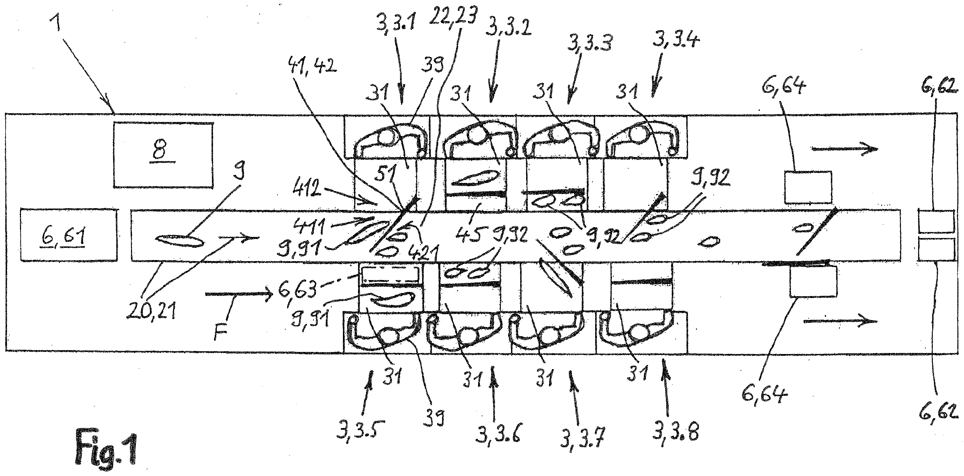

Gemäß Fig. 1 umfasst eine Nahrungsmittel-Bearbeitungsvorrichtung 1 ein Hauptfördermittel 21, das durch ein endlos umlaufendes Förderband mit ebener Förderfläche gebildet ist und einen linear und horizontal verlaufenden Hauptförderweg 20 bildet. An den Längsseiten des Hauptförderweges 20 sind, paarweise gegenüberliegend, jeweils vier Bearbeitungsstationen 3, nämlich einerseits die Stationen 3.1 bis 3.4 und anderseits die Stationen 3.5 bis 3.8 angeordnet. Die Bearbeitungsstationen 3 sind hinsichtlich erfindungsgemäßer Merkmale übereinstimmend ausgestattet und ausgebildet. Jede Bearbeitungsstation 3 umfasst einen in der Bearbeitungsvorrichtung 1 längsseitig äußeren, von dem Hauptförderweg 20 distanzierten Bearbeitungsplatz 31.

Wie aus Fig. 1 bis 3 ersichtlich, ist ein Querfördermittel 4 mit einer QuerfördermittelSchwenkachse 50 eingerichtet, die seitlich neben dem Hauptförderweg 20 und zu diesem mit einem Abstand D angeordnet ist. Die Querfördermittel-Schwenkachse 50 ist senkrecht zur Förderfläche des Hauptfördermittels 21 gerichtet. Das Querfördermittel 4 umfasst weiterhin ein Betätigungselement 51, das gemäß dem ersten Ausführungsbeispiel durch einen, wie noch näher beschrieben wird, doppelt wirkenden Schwenkarm gebildet ist. Ein an einer Seite der Bearbeitungsstation stromabwärts gelegenes Ende des Betätigungselements 51 ist drehfest mit der Querfördermittel-Schwenkachse 50 verbunden, die im Ausführungsbeispiel die Welle eines nicht dargestellten Schwenkantriebs ist. In einer Anfangs- oder Ruheposition ist der Schwenkarm parallel mit dem Hauptförderweg 20 ausgerichtet. In dieser Position befindet sich der Schwenkarm in einer Übergangslinie oder einem Übergangsbereich zwischen dem Bearbeitungsplatz 31 und einem als Durchgangsabschnitt 412 bezeichneten Raum mit einer Durchgangsfläche, die quer zu dem Hauptförderweg 20 durch den Abstand D und längs des Hauptförderwegs 20 durch die Armlänge des Betätigungselements 51 bestimmt ist.

Die Durchgangsfläche des Durchgangsabschnitts 412, eine Arbeitsfläche des Bearbeitungsplatzes 31 sowie die Förderfläche des Hauptförderwegs 20 bzw. des Hauptfördermittels 21 liegen zumindest im Wesentlichen in einer Ebene und infolgedessen auf zumindest im Wesentlichen gleichem Höhenniveau.

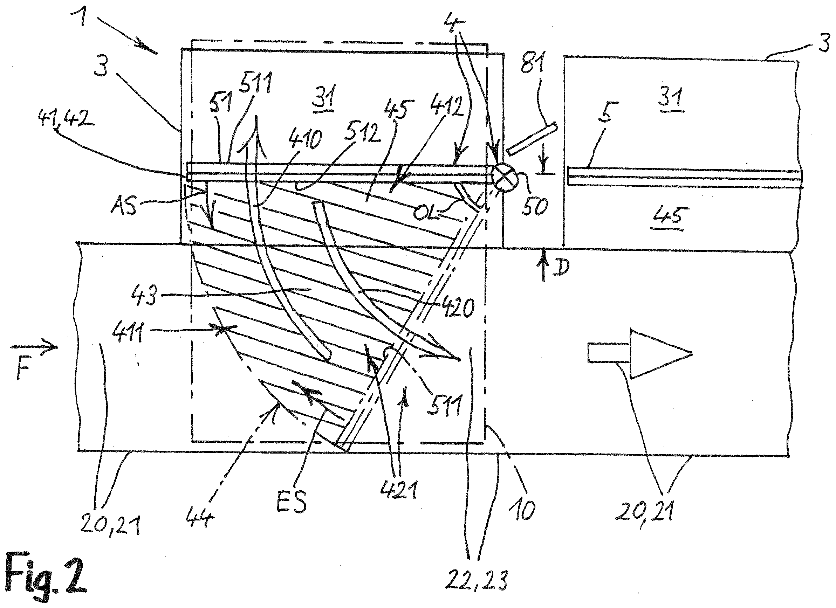

Die Durchgangsfläche bildet den Boden eines Abgabe-Pufferabschnitts 45, der als solcher in Funktion tritt, wenn sich das Schwenkarm-Betätigungselement 51 in der genannten Ruheposition befindet, wie dies in Fig. 2 dargestellt ist. Wie weiterhin insbesondere aus Fig. 2 ersichtlich, weist die Bearbeitungsstation 3 in quer zu dem Hauptförderweg 20 gerichteter Reihenanordnung 10 Abschnitte auf, nämlich den Abgabe-Pufferabschnitt 45, einen daran angrenzenden Entnahmeabschnitt 411 auf dem Hauptfördermittel 21 sowie stromabwärts einen mit dem Entnahmeabschnitt 411 überlappenden und daran angrenzenden Abgabeabschnitt 421 auf dem Hauptfördermittel 21. Zu der Reihenanordnung 10 gehört auch ein durch die Arbeitsfläche des Bearbeitungsplatzes 31 gebildeter Arbeitsabschnitt. Wie bereits erwähnt, liegen die Abschnitte im Ausführungsbeispiel zumindest im Wesentlichen auf gleichem Höhenniveau. Die Bearbeitungsfläche des Bearbeitungsplatzes 31 kann aber auch tiefer gelegen sein als die Fläche des Abgabe-Pufferabschnitts 45. Bei den Ausführungsbeispielen gemäß Fig. 1 bis 3 kommt es darauf an, dass Nahrungsmittelprodukte 9 mittels des Schwenkarm-Betätigungselements 51 bei der Entnahme von dem Hauptfördermittel 21 in den Durchgangsabschnitt 412 bzw. Abgabe-Pufferabschnitt 45 und bei der Abgabe aus diesem Abschnitt auf das Hauptfördermittel 21 gebracht, nämlich im Ausführungsbeispiel geschoben werden können. Hingegen ist der Übergang zwischen dem Durchgangsabschnitt 412 und dem Bearbeitungsplatz 31 nur so auszubilden, dass mittels des Schwenkarm-Betätigungselements 51 Nahrungsmittelprodukte 9 auf den Bearbeitungsplatz 31 gefördert werden.

Die genannte Doppelfunktion des Schwenkarm-Betätigungsmittels 51 wird anhand der folgenden Beschreibung deutlich, die sich erfindungsgemäß sowohl auf die Einrichtung und Anordnung als auch auf das Verfahren der Querförderung von Nahrungsmittelprodukten 9 bezieht.

Das Schwenkarm-Betätigungselement 51 ist durch Aufschwenken um die Querfördermittel-Schwenkachse 50 mit einem Schwenkwinkel OL in eine Umkehrposition schwenkbar, die in Fig. 2 strichpunktiert dargestellt ist. In der Umkehrposition sperrt das Schwenkarm-Betätigungselement 51 den Hauptförderweg 20. Die Sperrung ist derart, dass ein auf dem Hauptförderweg 20 in Förderrichtung F angefördertes Nahrungsmittelprodukt 91, das zu bearbeiten ist, in der Umkehrposition und gegebenenfalls auch schon beim Aufschwenken AS des Schwenkarm-Betätigungselements 51 in dem Entnahmeabschnitt 411 des Hauptfördermittels 21 abgefangen wird. Ein Entnahmeweg 410 der Bearbeitungsstation erstreckt sich, ausgehend von dem Schwenkarm-Betätigungselement 51 in seiner Umkehrposition, über den Entnahmeabschnitt 411 und den Durchgangsabschnitt 412 bis in den Bearbeitungsplatz 31 hinein.

In der Ruheposition des Schwenkarm-Betätigungselements 51 steht der neben sowie zwischen dem Hauptfördermittel 21 und dem Bearbeitungsplatz 31 vorgesehene Abgabe-Pufferabschnitt 45 zur Abgabe-Speicherung von Nahrungsmittelprodukten 92 zur Verfügung, die als solche in Einzahl oder Mehrzahl von dem Bearbeitungsplatz 31 manuell auf den Abgabe-Pufferabschnitt 45 gesetzt werden, nachdem auf dem Bearbeitungsplatz 31 eine manuelle Bearbeitung durch einen Bearbeiter stattgefunden hat. Zu bearbeiteten Nahrungsmittelprodukten 92 gehören auch solche, die von dem Bearbeitungsplatz 31 ohne Bearbeitung an den Abgabe-Pufferabschnitt 45 abgegeben werden.

Ein Abgabeweg 420 für wenigstens ein sich in dem Abgabe-Pufferabschnitt 45 befindendes Nahrungsmittelprodukt 92 ist dadurch bestimmt, dass das Schwenkarm-Betätigungselement 51 aus seiner Ruheposition in die Umkehrposition schwenkbar ist bzw. geschwenkt wird. Der Abgabeweg 420 geht von der Ruheposition des Schwenkarm-Betätigungselements 51 aus und reicht über die Umkehrposition hinaus. So umfasst der Abgabeweg 420 den Abgabe-Pufferabschnitt 45 sowie den als Abgabeabschnitt 421 definierten Abschnitt auf dem Hauptfördermittel 21.

Im Ausführungsbeispiel der Fig. 1 bis 3 wird das zu bearbeitende Nahrungsmittelprodukt 91 von dem Hauptförderweg 20 abgefördert, und das bearbeitete Nahrungsmittelprodukt 92 wird auf den Hauptförderweg 20 aufgefordert. Demzufolge bildet das Hauptfördermittel 21 im Bereich des Abgabeabschnitts 421 und weiter stromabwärts auch ein Abfördermittel 23. Entsprechend ist der Hauptförderweg 20 infolge des Vorbeigangs an der Bearbeitungsstation 3 auch ein Abförderweg 22, beginnend mit dem Abgabeabschnitt 421.

Man erkennt weiterhin, dass das Schwenkarm-Betätigungselement 51, zugleich ein Entnahmemittel 41 und ein Abgabemittel 42 bildet. Zu dem Entnahmemittel 41 gehört eine Entnahmeseite 511 des Schwenkarms, die in der Schwenkrichtung ES wirksam ist, in der der Schwenkarm aus der Umkehrposition in die Ruheposition schwenkt. Zu dem Abgabemittel 42 gehört eine Abgabeseite 512 des Schwenkarms, die wirksam ist, wenn der Schwenkarm gegensinnig in Richtung AS aus der Ruheposition in die Umkehrposition schwenkt. Das Betätigungselement 51 bildet in einer Hinbewegung das Entnahmemittel 41 und in einer Rückbewegung das Abgabemittel 42. Die Schwenkbewegungen werden mit dem gemeinsamen Drehwinkel OL gegensinnig durchgeführt.

Wie beschrieben und insbesondere aus Fig. 2 ersichtlich, überlappen sich der Entnahmeweg 410 und der Abgabeweg 420 in einem räumlichen Bereich 44 teilweise über dem Hauptfördermittel 21. Im Ausführungsbeispiel der Fig. 1 bis 3 ist der Überlappungsbereich eine gemeinsame Wegfläche 43 der beiden Wege.

Der Betrieb der Nahrungsmittel-Bearbeitungsvorrichtung 1 gemäß Fig. 1 wird beispielhaft beschrieben.

An der Bearbeitungsstation 3.1 ist das Betätigungselement 51 in seiner Umkehrposition zu sehen. Ein zu bearbeitendes Nahrungsmittelprodukt 9, 91 befindet sich auf dem Entnahmeabschnitt 411 und wird von dort den Durchgangsabschnitt 412 passieren und auf den Bearbeitungsplatz 31 gelangen. Zum gleichen Zeitpunkt befinden sich auf dem Abgabeabschnitt 421 zwei bearbeitete Nahrungsmittelprodukte 9, 92, die aus dem durch die Ruheposition des Betätigungselements 51 bestimmten Abgabe-Pufferabschnitt 45 mittels des Betätigungselements 51 an den Abgabeabschnitt 421 gegeben worden sind. In der Bearbeitungsstation 3.2 befindet sich gerade ein zu bearbeitendes Nahrungsmittelprodukt 91 auf dem Bearbeitungsplatz 31. Der Abgabe-Pufferabschnitt 45 ist noch leer. Hingegen ist an der Bearbeitungsstation 3.3 der Bearbeitungsplatz 31 leer und der Abgabe-Pufferabschnitt 45 ist mit zwei bearbeiteten Nahrungsmittelprodukten 92 besetzt. Die Situation in der Bearbeitungsstation 3.4 ist ähnlich wie an der Bearbeitungsstation 3.1, doch das Betätigungselement 51 wird in seine Ruheposition zurückkehren, ohne ein Nahrungsmittelprodukt zur Bearbeitung zu entnehmen.

An der Bearbeitungsstation 3.5, die der Bearbeitungsstation 3.1 gegenüberliegt, befindet sich ein zu bearbeitendes Nahrungsmittelprodukt 91 auf dem Bearbeitungsplatz 31. Der Abgabe-Pufferabschnitt 45 ist noch leer. An der Bearbeitungsstation 3.6 liegen zwei bearbeitet Nahrungsmittelprodukte 92 in dem Abgabe-Pufferabschnitt 45 zur Abgabe bereit. Die Situation an der Bearbeitungsstation 3.7 entspricht der Situation an der Bearbeitungsstation 3.1. Die Bearbeitungsstation 3.8 ist zur Entnahme bereit, ohne dass sie über ein abzugebendes Nahrungsmittelprodukt verfügt.

Eine an sich bekannte Steuerung 8, die z. B. mit einem zentralen Computer der Bearbeitungsvorrichtung 1 ausgestattet ist, ist durch nicht dargestellte Signal-/Datenübertragungsmittel mit den Bearbeitungsstationen 3.1 bis 3.8 sowie mit weiteren Stationen 6 verbunden, nämlich z. B. mit einer Eingangs-Wägeeinrichtung 61, mit Ausgangs-Wägeeinrichtungen 62, mit einer strichpunktiert dargestellten Entnahme/Abgabe-Wägeeinrichtung 63 und mit Qualitätsprüfungs-Stationen 64. Die Steuereinrichtung 8 ist zudem mit nicht dargestellten an sich bekannten Mitteln verbunden, die zum Erfassen, Individualisieren und zum Verfolgen des Weges der Nahrungsmittelprodukte 9 eingerichtet sind. Insbesondere umfasst eine Bearbeitungsstation 3 auch ein Kommunikationsmittel 81, das insbesondere mit einem Anzeigegerät und/oder einem Informations-Eingabegerät oder -Bestätigungsgerät ausgestattet ist. Die Steuereinrichtung 8 koordiniert den gesamten Betrieb der Nahrungsmittel-Bearbeitungsvorrichtung 1, insbesondere hinsichtlich geeigneter Verteilung der Nahrungsmittelprodukte 9 zum Bearbeiten und nach dem Bearbeiten an die Stationen 3, die nur beispielhaft und nicht abschließend aus dem Ausführungsbeispiel der Fig. 1 ersichtlich sind.

Erfindungsgemäß kann die Entnahme-/Abgabe-Wägeeinrichtung oder eine andere Messeinrichtung 63 Bestandteil einer besonderen Steuerung der Steuereinrichtung 8 sein. Insbesondere ist die Einrichtung 63 ein Mittel, das die Belegung des Abgabe-Pufferabschnitts 45 der Bearbeitungsstation 3 mit wenigstens einem abzugebenden Nahrungsmittelprodukt 92 qualitativ erfasst, wobei die Steuerung derart eingerichtet ist, dass im Falle einer Belegung das zugehörige Betätigungselement 51 zur Abgabe/Entnahme betätigt wird, sobald ein zur Bearbeitung in der betreffenden Bearbeitungsstation 3 geeignetes und/oder bestimmtes Nahrungsmittelprodukt 91 zu dieser Bearbeitungsstation 3 gelangt.

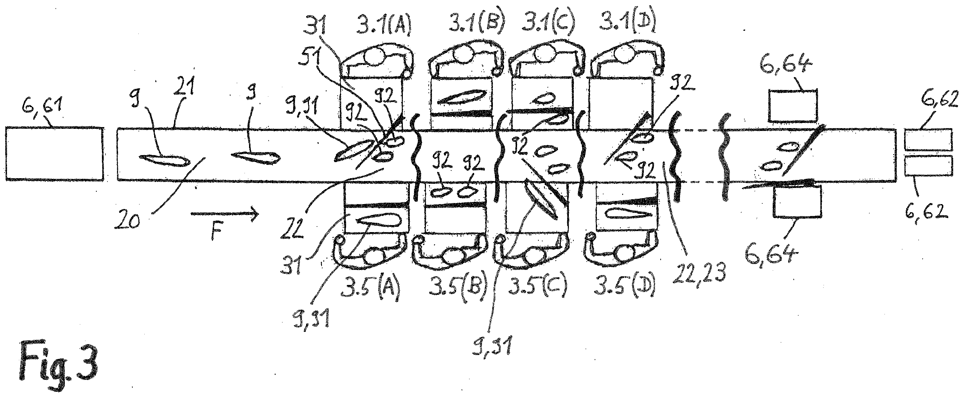

Fig. 3 zeigt ein Beispiel des Betriebs einer Bearbeitungsstation 3.1 und einer an dem Hauptfördermittel 21 gegenüberliegenden Bearbeitungsstation 3.5, wobei vier aufeinanderfolgende Bearbeitungssituationen A bis D an jeweils ein und derselben Bearbeitungsstation 3.1 bzw. 3.5 dargestellt sind. In der Bearbeitungsstation 3.1 wird in der Situation A ein Nahrungsmittelprodukt 91 dem Hauptfördermittel 21 mittels des einzigen Betätigungselements 51 entnommen, dass zugleich zwei bearbeitete Nahrungsmittelprodukte 92 abgibt. In der folgenden Situation B befindet sich das entnommene Nahrungsmittelprodukt 92 auf dem Bearbeitungsplatz 31, während der Abgabe-Pufferabschnitt 45 leer ist. In der anschließenden Situation C erkennt man, dass das zu bearbeitende Nahrungsmittelprodukt 91 in zwei Teile zerlegt worden ist, wobei ein Teil als bereits bearbeitetes Nahrungsmittelprodukt 92 in den Abgabe-Pufferabschnitt 45 gegeben worden ist. In der folgenden Situation D ist die Bearbeitung beendet, und die beiden bearbeiteten Nahrungsmittelprodukte 92 werden auf das Hauptförder-/Abgabefördermittel abgegeben. In der Bearbeitungsstation 3.5 befindet sich zunächst ein zu bearbeitendes Nahrungsmittelprodukt 91 auf dem Bearbeitungsplatz 31, und der Abgabe-Pufferabschnitt 45 ist zur Aufnahme bereit (Situation A). In der nachfolgenden Situation B ist die Bearbeitung bereits beendet worden, und zwei resultierende Nahrungsmittelprodukte 92 liegen in dem Abgabe-Pufferabschnitt 45. Diese werden anschließend auf das Hauptfördermittel/Abfördermittel 22, 23 gegeben, und zwar z. B. nachdem die genannte Steuereinrichtung 8 festgestellt hat, dass der Abgabe-Pufferabschnitt 45 mit zwei bearbeiteten Nahrungsmittelprodukten 92 belegt ist, der Bearbeitungsplatz 31 zur Bearbeitung zur Verfügung steht und zudem ein zur Bearbeitung an der Bearbeitungsstation 3.5 bestimmtes Nahrungsmittelprodukt 91 diese Bearbeitungsstation erreicht hat (Situation C). Die nachfolgende Situation D zeigt das an den Bearbeitungsplatz 31 bewegte Nahrungsmittelprodukt 91. Aus Fig. 1 und 3 geht hervor, dass im Ausführungsbeispiel der Betrieb der Bearbeitungsvorrichtung 1 so eingerichtet ist und die Förderung so gestaltet ist, dass auf dem Hauptfördermittel/Abfördermittel 21, 23 zwei parallele Linien gebildet sind, in denen die Nahrungsmittelprodukte 9 gefördert werden. Diesen beiden Linien sind paarweise die Qualitätsprüfungs-Stationen 64 sowie die Ausgangs-Wägeeinrichtungen 62 zugeordnet.

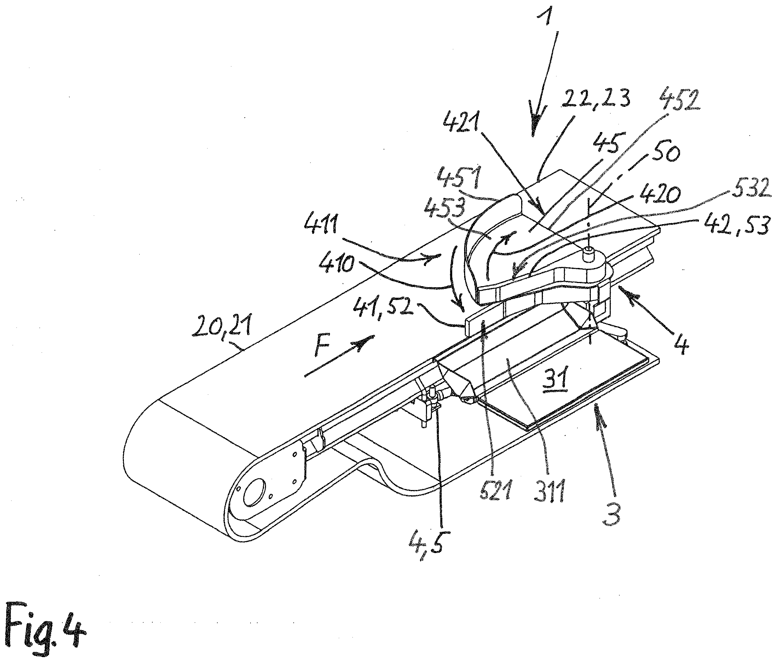

Fig. 4 zeigt eine andere Ausgestaltung der Erfindung. Es werden gleiche Bezugszeichen wie bisher verwendet, soweit die einzelnen Teile und Aggregate hinsichtlich ihrer Funktion und Wirkungsweise Entsprechungen aufweisen. Insoweit wird auch auf die vorangegangene Beschreibung Bezug genommen.

Aus Fig. 4 ist eine Bearbeitungsstation 3 einer Nahrungsmittel-Bearbeitungsvorrichtung 1 ersichtlich. Die Bearbeitungsstation 3 ist an einer Seite eines Hauptfördermittels 21, nämlich eines umlaufenden Bandförderers angeordnet, der einen linearen Hauptförderweg 20 in Förderrichtung F bildet. Das Hauptfördermittel 21 bildet zugleich ein Abfördertnittel 23, da bearbeitete Nahrungsmittelprodukte auf einen stromabwärts der Bearbeitungsstation 3 gelegenen Abgabeabschnitt 421 des Hauptfördermittels 21 gegeben werden.

Die Bearbeitungsstation 3 des Ausführungsbeispiels gemäß Fig. 4 umfasst zwei getrennte, jedoch um eine gemeinsame Querfördermittel-Schwenkachse 50 hin- und herschwenkbare Betätigungselemente, nämlich ein Betätigungselement 52, das ein Entnahmemittel 41 bildet, und ein Betätigungselement 53, das ein Abgabemittel 42 bildet. Die Betätigungselemente 52, 53 sind jeweils durch einen Schwenkarm gebildet.

Das Entnahme-Betätigungselement 52 befindet sich und arbeitet auf dem Höhenniveau der Förderfläche des Hauptfördermittels 21. Oberhalb des Schwenkbereichs des Entnahme-Betätigungselements 52 im Bereich des Hauptförderwegs 20 befindet sich in stationärer Anordnung eine trayartige Ablage, die einen oberhalb des Hauptfördermittels 21 und damit zwischen diesem und einem Bearbeitungsplatz 31 angeordneten Abgabe-Pufferabschnitt 45 bildet. Die Ablage weist einen im Wesentlichen durch eine Viertelkreisfläche gebildeten Ablageboden 453 auf, der an seinem Kreisrand mit einer bearbeitete Nahrungsmittelprodukte in dem Abgabe-Pufferabschnitt 45 haltenden und führenden Ablagewand 451 ausgestattet ist. Ein stromabwärts gelegener freier Rand der Ablage bildet einen Abgaberand 452, an dem bearbeitete Nahrungsmittelprodukte durch freien Fall auf den Abgabeabschnitt 421 eines einen Bestandteil des Hauptförderweges 20 bildenden Abförderwegs 22 gelangen.

Das Abgabe-Betätigungselement 53 ist oberhalb des Entnahme-Betätigungselements 52 in einem der Bodenfläche des Abgabe-Pufferabschnitts 45 entsprechenden Höhenniveau derart angeordnet und mit einer Schwenkarmlänge ausgebildet, dass es bei Schwenkbewegung um die Fördermittel-Schwenkachse 50 über die zur Hauptförderfläche parallele Bodenfläche der Ablage streicht, wobei es, ausgehend von einer Ruheposition am Längsrand des Hauptfördermittels 21 und in eine Umkehrposition gelangend, in den Abgabe-Pufferabschnitt 45 gegebene bearbeitete Nahrungsmittelprodukte längs eines Abgabewegs 420 unverlierbar zu dem Abgaberand 452 befördert.

Im Ausführungsbeispiel der Fig. 4 sind das Entnahme-Betätigungselement 52 und das Abgabe-Betätigungselement 53 frei von Winkelversatz und drehfest, also gemeinsam und konform um die Querfördermittel-Schwenkachse 50 schwenkend, miteinander verbunden. Demgemäß sind die beiden Betätigungselemente 52, 53 fest mit einer gemeinsamen Antriebswelle verbunden, die um die Querfördermittel-Schwenkachse 50 dreht. Ein gemeinsames Querfördermittel 4 für die beiden Betätigungselemente 52, 53 umfasst die Antriebswelle sowie einen diese zum Schwenken hin- und herdrehenden Schwenkantrieb 5.

Anders als bei den Ausführungsbeispielen gemäß Fig. 1 bis 3 kann die gemeinsame Querfördermittel-Schwenkachse 50, wie in Fig. 4 dargestellt, mit nur geringem Abstand zum Längsrand des Hauptförderweges 20 angeordnet sein. Die Anordnung ist derart, dass sich das Entnahme-Betätigungselement 52 in einer der Ruheposition des Abgabe-Betätigungselements 53 entsprechenden Ruheposition am Längsrand des Hauptförderwegs 20 erstreckt, derart, dass es einen Entnahmeabschnitt 411 des Hauptförderwegs 20 bzw. des Hauptfördermittels 21 beim Hin- und Herschwenken zwischen der Ruheposition und einer Umkehrposition erfasst bzw. überstreicht.

Im Ausführungsbeispiel der Fig. 4 ist der Bearbeitungsplatz 31 der Bearbeitungsstation 3 auf einem Höhenniveau etwas unterhalb des Höhenniveaus des Hauptförderweges 20 vorgesehen. Zwischen dem Bearbeitungsplatz 31 und dem Entnahme-Betätigungselement 52 ist ein Zwischenabschnitt 311 angeordnet, der im Ausführungsbeispiel als Rutschfläche vorgesehen ist, über die von dem Entnahme-Betätigungselement 52 entnommene, zu bearbeitende Nahrungsmittelprodukte an den Bearbeitungsplatz 31 gelangen.

Man erkennt, soweit in Übereinstimmung mit den Ausführungsbeispielen gemäß Fig. 1 bis 3, dass sich der Abgabeweg 420 des Abgabe-Betätigungselements 53 und der Entnahmeweg 410 des Entnahme-Betätigungselements 52 räumlich überlappen. Ablauf und Funktionsweise des Betriebs des Querfördermittels 4 sind aus Fig. 4 ersichtlich. Zur Entnahme von zu bearbeitenden Nahrungsmittelprodukten (nicht dargestellt), die in Förderrichtung F vor die Bearbeitungsstation 3 gelangen, wird das Entnahme-Betätigungselement 52 zunächst aus seiner Ruheposition bis zur Umkehrposition herausgeschwenkt. Diese Schwenkbewegung erfolgt gleichzeitig und konform mit dem Aufschwenken des Abgabe-Betätigungselements 53 aus der entsprechenden Ruheposition bis in seine Umkehrposition im Bereich des Abgaberandes 452. Der Abgabeweg 420 wird erfasst bzw. überstrichen. In den Abgabe-Pufferabschnitt 45 gegebene Nahrungsmittelprodukte gelangen gegen eine Abgabeseite 532 des Abgabe-Betätigungselements 53 und werden über den Abgaberand 452 abgefördert. Anschließend werden die beiden Betätigungselemente 52, 53 zeitgleich und konform aus den Umkehrpositionen in die Ruhepositionen zurückgeschwenkt, wobei das Entnahme-Betätigungselement 52 über den Entnahmeweg 410 bewegt wird und mit einer Entnahmeseite 521 wenigstens ein zu bearbeitendes Nahrungsmittelprodukt erfassen und dem Produktstrom entnehmen kann.

In Abwandlung des Ausführungsbeispiels gemäß Fig. 4 besteht eine Gestaltung darin, dass die beiden Betätigungselemente 52, 53 zwar in drehfester Verbindung, jedoch mit einem Winkelversatz angeordnet werden. Z. B. kann die Einrichtung derart sein, dass das Abgabe-Betätigungselement 53, von der Ruheposition ausgehend, dem Entnahme-Betätigungselement 52 nacheilt. Diese Gestaltung kann damit verbunden sein, dass die Ablagefläche des Abgabe-Pufferabschnitts 45 zur Seite des Bearbeitungsplatzes 31 hin verlängert wird.

Eine Abwandlung der in Fig. 4 dargestellten Ausführung kann auch darin bestehen, dass die beiden Betätigungselemente 52, 53 wenigstens in einem Winkelbereich des Abgabewegs 420 und/oder des Entnahmewegs 410 getrennt voneinander mit Zeitversatz und/oder räumlichem Versatz geschwenkt werden. Eine dafür geeignete Anordnung besteht darin, dass die beiden Betätigungselemente 52, 53 an jeweils einer zugeordneten Antriebswelle sitzen, wobei beide Antriebswellen um die gemeinsame Querfördermittel-Schwenkachse 50 drehen/schwenken und mittels eines Getriebes und/oder zugeordneter Antriebe mit Steuerung zum Ausführen des genannten Versatzes betrieben werden. Insbesondere kann man erreichen, dass die bearbeiteten Nahrungsmittelprodukte erst auf den Abgabeabschnitt 421 des Abgabewegs 420 abgegeben werden, nachdem das Entnahme-Betätigungselement 52 bis zur Umkehrposition aufgeschwenkt worden ist und gegebenenfalls auch für eine bestimmte Zeit in dieser Position gehalten worden ist. Der genannte Versatz kann ganz oder teilweise auch durch den Betrieb mit unterschiedlichen Winkelgeschwindigkeiten der beiden Betätigungselemente 52, 53 erreicht werden.

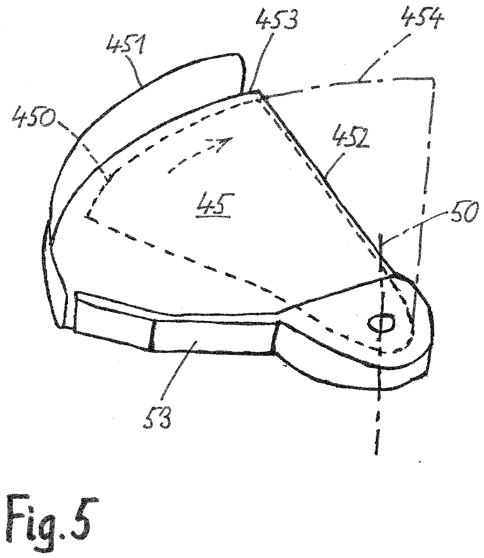

Fig. 5 zeigt als Beispiel eine weitere Ausführung des Abgabe-Pufferabschnitts 45, die zum Beispiel durch Abwandlung der Bearbeitungsstation 3 gemäß Fig. 4 vorgesehen werden kann. Die beiden Betätigungselemente 52, 53 sollen, wie in Fig. 4, drehfest und versatzfrei, zum Beispiel mittels einer gemeinsamen Antriebswelle verbunden sein. Die Ablage des Abgabe-Pufferabschnitts 45 wird anders ausgebildet, in dem der Abgabe-Pufferabschnitt 45 mit einem den Abgabeweg 420 verlängernden Abgabeteil 450 ausgebildet ist, das durch das Abgabe-Betätigungselement 53 bewegte und von dem Abgabe-Pufferabschnitt 45 an dem Abgaberand 452 abgeschobene Nahrungsmittelprodukte aufnimmt, und zwar in einer der Umkehrposition des Abgabe-Betätigungselements 53 zugeordneten Halteposition.

Im Ausführungsbeispiel gemäß Fig. 5 ist das Abgabeteil 450 durch einen Schwenkboden in Verbindung mit einem diesem zur verdeckten Aufnahme zugeordneten Schubraum gebildet, der unter dem Abgabeboden 453 angeordnet ist. Der Schwenkboden weist z. B. eine dem Ablageboden 453 entsprechende Größe auf. Wesentlich ist, dass der Schwenkboden so eingerichtet ist, dass er gemeinsam mit der Abgabe-Schwenkbewegung des Abgabe-Betätigungselements 53 aus in der Ruheposition des Abgabe-Betätigungselements 53 wenigstens teilweise verdeckter Stellung in eine den Ablageboden 453 mit einer Ablagefläche 454 verlängernde Position schwenkbar ist. Diese verlängernde Fläche ist in Fig. 5 strichpunktiert dargestellt. Man erkennt, dass die Einrichtung derart ist, dass Nahrungsmittelprodukte, die sich auf dem Ablageboden 453 befinden, beim gemeinsamen Schwenken des Abgabe-Betätigungselements 53 und des Schwenkbodens auf den durch letzteren verlängerten Boden gelangen und dort noch gehalten sind, wenn das Abgabe-Betätigungselement 53 seine Umkehrposition erreicht. Der Abgaberand 452 wird als Halterand ausgebildet, gegen den ein oder mehrere Nahrungsmittelprodukte, die sich auf dem ausgefahrenem Schwenkboden befinden, beim Zurückschwenken des Schwenkbodens geschoben werden, so dass sie beim Zurückbewegen des Schwenkbodens in die verdeckte Stellung auf den Abgabeabschnitt 421 des Abförderwegs 22 gelangen. Man erreicht, dass die bearbeiteten Nahrungsmittelprodukte mit Zeitversatz erst auf den Abförderweg 22 gegeben werden, wenn das Entnahme-Betätigungselement 52 aus seiner Umkehrposition in die Ruheposition geschwenkt wird.

Eine weitere Abwandlung oder Ausgestaltung besteht darin, dass zwei Betätigungselemente 52, 53, wie sie z. B. in Fig. 4 dargestellt sind, durch ein einziges Betätigungselement, das um die Querfördermittel-Schwenkachse 50 schwenkbar ist, ersetzt werden können. Eine solche Einrichtung wird auch hinsichtlich eines Zeitversatzes zwischen Entnahme und Abgabe vorgesehen. Das einzige Betätigungselement einer solchen Einrichtung ist in zwei Höhenpositionen setzbar. In der ersten Höhenposition ist es dem Höhenniveau des Hauptförderwegs 20 zugeordnet, während es in der zweiten Höhenposition dem Höhenniveau des Abgabe-Pufferabschnitts 45 zugeordnet ist. Das einzige Betätigungselement wird dann in der ersten Höhenposition, ausgehend von einer zugeordneten ersten, zum Beispiel unteren Ruheposition, zum Einleiten der Entnahme insbesondere bis zur Umkehrposition aufgeschwenkt und dann entlang des Entnahmewegs 410 in die erste Ruheposition zurückgeschwenkt. Aus der ersten Ruheposition ist es in eine der zweiten Höhenposition zugeordnete zweite, zum Beispiel obere Ruheposition setzbar. Aus der zweiten Ruheposition ist das genannte Betätigungselement über den Abgabeweg 420 bis in die zugehörige Umkehrposition bewegbar und von dort wieder zurück in die zweite und dann in die erste Ruheposition setzbar. Das Querfördermittel 4 umfasst dann zum Beispiel ein Hebel- und Absenkmittel, das das Betätigungselement aus der ersten Höhenposition in die zweite Höhenposition hebt bzw. umgekehrt absenkt, und zwar in Abhängigkeit von den beiden Schwenkbereichen zur Entnahme bzw. zur Abgabe.

Insbesondere die im Zusammenhang mit Fig. 4 genannten Abwandlungen und geänderten Ausführungen sind jeweils eigenständige Gestaltungen, die nicht an die übrige Gestaltung der Vorrichtung gemäß Fig. 4 gebunden sind, sondern aufgrund ihrer Eigenart in jeder allgemein erfindungsgemäß beanspruchten Bearbeitungsvorrichtung eingerichtet bzw. zum Durchführen des Verfahrens genutzt werden können.

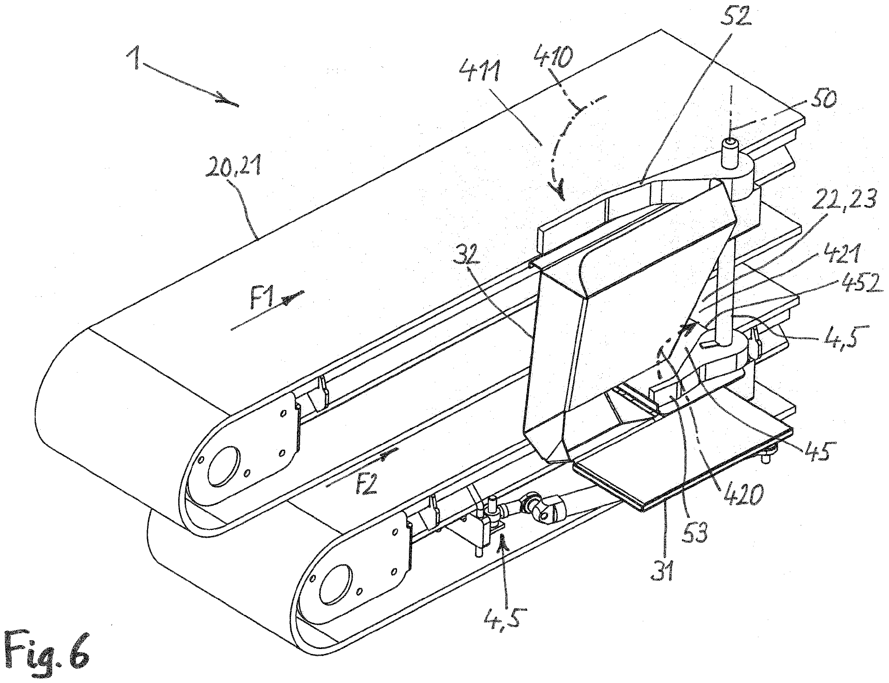

Fig. 6 zeigt ein weiteres Ausführungsbeispiel einer erfindungsgemäßen Nahrungsmittel-Bearbeitungsvorrichtung 1. Wie zuvor werden für hinsichtlich Funktion und Wirkungsweise entsprechende Mittel und Aggregate gleiche Bezugszeichen verwendet.

Eine Besonderheit des Ausführungsbeispiels gemäß Fig. 6 besteht darin, dass ein Abfördermittel 23 getrennt von einem Hauptfördermittel 21 ausgebildet ist. Ein Hauptförderweg 20 und ein Abförderweg 22 liegen in unterschiedlichen Höhenebenen. Fig. 6 zeigt einen Teil der Bearbeitungsvorrichtung 1 mit einer Bearbeitungsstation 3, die mit einem Bearbeitungsplatz 31 ausgestattet ist.

Das Hauptfördermittel 21 ist als Bandförderer mit umlaufendem Förderband ausgebildet, das längs des Hauptförderwegs 20 in Richtung F1 läuft. Unter dem Hauptfördermittel 21 ist das Abfördermittel 23 angeordnet, das gleichfalls durch einen umlaufenden Bandförderer mit dem Abförderweg 22 in Richtung F2 gebildet ist. Die Einrichtung ist derart, dass die Band-Förderflächen des Hauptförderwegs 20 und des Abförderwegs 22 gleich dimensioniert sind und in den entsprechenden Richtungen F1 und F2 parallel liegend laufen.

Die Bearbeitungsstation 3 umfasst zwei Betätigungselemente, nämlich ein dem oberen Hauptförderweg 20 zugeordnetes Entnahme-Betätigungselement 52 sowie ein dem unteren Abförderweg 22 zugeordnetes Abgabe-Betätigungselement 53. Die beiden Betätigungselemente 52, 53 sind drehfest, d. h. gemeinsam schwenkbar mit einer gemeinsamen Antriebswelle verbunden, die um eine gemeinsame Querfördermittel-Schwenkachse 50 drehbar ist. Ein Querfördermittel 4 umfasst die Antriebswelle mit der Querfördermittel-Schwenkachse 50 und einen die Antriebswelle hin- und herdrehenden Schwenkantrieb 5.

Jedes der beiden Betätigungselemente 52, 53 ist als Schwenkarm ausgebildet. Die Schwenkachse 50 ist an der stromabwärts gelegenen Seite der Bearbeitungsstation 3 mit zu den Förderflächen senkrechter Ausrichtung angeordnet.

Das Entnahme-Betätigungselement 52 bestimmt einen Entnahmeweg 410 zwischen einer Ruheposition und einer Umkehrposition, und das Abgabe-Betätigungselement 53 bestimmt entsprechend einen Abgabeweg 420 zwischen Ruheposition und Umkehrposition. Das Entnahme-Betätigungselement 52 befindet sich in der Ruheposition am Längsrand des Hauptförderwegs 20, und das Abgabe-Betätigungselement 53 befindet sich in seiner Ruheposition am Längsrand des Abförderwegs 22. Die beiden Betätigungselemente 52, 53 sind ohne Drehwinkelversatz angeordnet.

Der Bearbeitungsplatz 31 ist seitlich neben dem Abförderwegs 22 und dem Abgabe-Betätigungsmittel 53 angeordnet. Der Bearbeitungsplatz 31 umfasst zudem einen Entnahmeschacht 32, der seitlich neben dem Hauptfördermittel 21 und dem Abfördermittel 23 stromaufwärts der Schwenkachse 50 angeordnet ist. Der Entnahmeschacht 32 weist eine der Ruheposition des Entnahme-Betätigungselements 52 zugeordnete Eingabeöffnung am oberen Ende sowie gegenüberliegend am unteren Ende eine Entnahmeöffnung mit einer Entnahmemulde zwischen dem Abfördermittel 23 und dem Bearbeitungsplatz 31 auf.

Das Abgabe-Betätigungselement 53 ist einem stationären Abgabe-Pufferabschnitt 45 zugeordnet, der oberhalb des Abförderwegs 22 und damit zwischen diesem und dem Bearbeitungsplatz 31 angeordnet ist. Insbesondere ist eine trayartige Ablage mit einem Abgaberand 452 wie im Ausführungsbeispiel der Fig. 4 gebildet. Der Abgabe-Pufferabschnitt 45 ist, wie z. B. auch gemäß Fig. 4, zur manuellen Beschickung in Reichweite des Bearbeitungsplatzes 31 angeordnet.

Man erkennt anhand der Fig. 6 Funktionsweise und Ablauf der Entnahme und Abgabe. Wie entsprechend zuvor näher beschrieben, wird wenigstens ein zu bearbeitendes Nahrungsmittelprodukt durch Aufschwenken des Entnahme-Betätigungselements 52 und Rückschwenken desselben über den Entnahmeweg 410 von dem Hauptförderweg 20 entnommen. Jedes entnommene Nahrungsmittelprodukt gelangt durch den Entnahmeschacht 32 in die Entnahmemulde, aus der es zur Bearbeitung entnommen wird. Im Anschluss an die Bearbeitung wird jedes bearbeitete Nahrungsmittelprodukt in den Abgabe-Pufferabschnitt 45 gegeben. Ausgehend von seiner Ruheposition (Anfangsposition) schiebt das aufschwenkende Abgabe-Betätigungselement 53 jedes bearbeitete Nahrungsmittelprodukt längs des Abgabewegs 420 zu dem Abgaberand 452. Dort fällt das Nahrungsmittelprodukt auf den Abgabeabschnitt 421 des Abförderweges 22. Beim Aufschwenken des Abgabe-Betätigungselements 53 schwenkt das damit konform bewegte Entnahme-Betätigungselement 52 aus seiner Ruheposition in die Umkehrposition vor den dann stromaufwärts liegenden Entnahmeabschnitt 411.

Die getrennte Anordnung des Hauptfördermittels und des Abfördermittels mit den zwei Höhenpositionen zugeordneten Betätigungselementen ist auf Gestaltungen gemäß Fig. 6 nicht beschränkt. Insbesondere kann das Hauptfördermittel unterhalb des Abfördermittels angeordnet sein. Die beiden Fördermittel können unterschiedlicher Art und/oder Gestaltung sein. Wie insbesondere im Zusammenhang mit Fig. 4 erläutert, können die beiden Betätigungselemente durch ein einziges Betätigungselement ersetzt werden, dass in Zuordnung zu Entnahme und Abgabe in wenigstens zwei Höhenpositionen setzbar ist. Im Übrigen können, wie ebenfalls zuvor erläutert, die beiden Betätigungselemente (einerseits zur Entnahme, anderseits zur Abgabe) mit Winkelversatz und/oder jedenfalls in wenigstens einem Drehwinkelbereich getrennt voneinander um die gemeinsame Querfördermittel-Schwenkachse 50 schwenkbar eingerichtet sein.

## Patentansprüche

1. Nahrungsmittel-Bearbeitungsvorrichtung (1), umfassend ein Nahrungsmittelprodukte (9) in einem Produktstrom entlang eines Hauptförderwegs (20) förderndes Hauptfördermittel (21) sowie ein bearbeitete Nahrungsmittelprodukte (9, 92) entlang eines Abförderweges (22) abförderndes Abfördermittel (23) und wenigstens eine Bearbeitungsstation (3), die einen seitlich neben dem Hauptförderweg (20) angeordneten Bearbeitungsplatz (31) aufweist, mit einem Entnahmemittel (41), das zu bearbeitende Nahrungsmittelprodukte (9, 91) von einem Entnahmeabschnitt (411) des Hauptförderweges (20) aus dem Produktstrom entnimmt und über einen Entnahmeweg (410) quer zu dem Hauptförderweg (20) an den Bearbeitungsplatz (31) gibt, sowie mit einem Abgabemittel (42), das an dem Bearbeitungsplatz (31) bearbeitete Nahrungsmittelprodukte (9, 92) über einen Abgabeweg (420) an einen Abgabeabschnitt (421) des Abförderweges (22) abgibt, **dadurch gekennzeichnet, dass** ein Querfördermittel (4) mit einer für das Entnahmemittel (41) und das Abgabemittel (42) gemeinsamen Schwenkachse (50) eingerichtet ist, um die das Entnahmemittel (41) sowie das Abgabemittel (42) durch Schwenkbewegung zur Entnahme und Abgabe der genannten Nahrungsmittelprodukte (9, 91, 92) hin und her bewegbar sind, und dass ein Abgabe-Pufferabschnitt (45) eingerichtet ist, der zur Aufnahme von den bearbeiteten, zur Abgabe an den Abgabeabschnitt (421) bestimmten Nahrungsmittelprodukten (9, 92) ausgebildet ist und der dem um die gemeinsame Querfördermittel-Schwenkachse (50) schwenkbaren Abgabemittel (42) zugeordnet ist, wobei das um die gemeinsame Querfördermittel-Schwenkachse (50) schwenkbare Entnahmemittel (41) zu der Entnahme der Nahrungsmittelprodukte (9, 91) den Entnahmeabschnitt (411) und das um die gemeinsame Querfördermittel-Schwenkachse (50) schwenkbare Abgabemittel (42) zu der Abgabe der Nahrungsmittelprodukte (9, 92) an den Abgabeabschnitt (421) den Abgabe-Pufferabschnitt (45) erfasst.

2. Bearbeitungsvorrichtung nach Anspruch 1, **dadurch gekennzeichnet, dass** das Entnahmemittel (41) und das Abgabemittel (42) gegensinnig um die gemeinsame Querfördermittel-Schwenkachse (50) schwenkbar sind.

3. Bearbeitungsvorrichtung nach Anspruch 1 oder 2, **dadurch gekennzeichnet, dass** sich der Entnahmeweg (410) und der Abgabeweg (420) wenigstens teilweise räumlich überlappen (Fig. 2, Fig. 4, Fig. 5)

4. Bearbeitungsvorrichtung nach einem der Ansprüche 1 bis 3, **dadurch ge- kennzeichnet,** dass das Entnahmemittel (41) und das Abgabemittel (42) durch ein einziges um die Querfördermittel-Schwenkachse (50) hin und her schwenkbares Betätigungselement (51) gebildet sind, das in Hinbewegung das Entnahmemittel (41) und in Rückbewegung das Abgabemittel (42) bildet (Fig. 2).

5. Bearbeitungsvorrichtung nach Anspruch 4, **dadurch gekennzeichnet, dass** das einzige Betätigungselement (51) relativ zu dem Hauptförderweg (20) und zu dem Abförderweg (22) höhenverstellbar ist, wobei es in einem ersten Höhenniveau das Entnahmemittel (41) und in einem zweiten Höhenniveau das Abgabemittel (42) bildet.

6. Bearbeitungsvorrichtung nach einem der Ansprüche 1 bis 3, **dadurch ge- kennzeichnet,** dass das Entnahmemittel (41) und das Abgabemittel (42) durch zwei getrennte, um die Querfördermittel-Schwenkachse (50) hin und her schwenkbare Betätigungselemente gebildet sind, nämlich durch ein Entnahme-Betätigungselement (52), das einem ersten Höhenniveau zugeordnet ist, sowie durch ein Abgabe-Betätigungselement (53), das einem zweiten Höhenniveau zugeordnet ist (Fig. 4; Fig. 5).

7. Bearbeitungsvorrichtung nach Anspruch 6, **dadurch gekennzeichnet, dass** das Entnahme-Betätigungselement (52) und das Abgabe-Betätigungselement (53) gemeinsam, nämlich in drehfester Verbindung miteinander, um die Querfördermittel-Schwenkachse (50) hin und her schwenkbar sind (Fig. 4; Fig. 5).

8. Bearbeitungsvorrichtung nach Anspruch 6, **dadurch gekennzeichnet, dass** das Entnahme-Betätigungselement (52) und das Abgabe-Betätigungselement (53) getrennt voneinander, nämlich mit jeweils selbstständiger Drehbewegung um die Querfördermittel-Schwenkachse (50) hin und her schwenkbar sind.

9. Bearbeitungsvorrichtung nach einem der Ansprüche 1 bis 8, **dadurch gekennzeichnet, dass** der Abförderweg (22) Bestandteil des Hauptförderweges (20) ist (Fig. 2, Fig. 4).

10. Bearbeitungsvorrichtung nach Anspruch 9, **dadurch gekennzeichnet, dass** der Entnahmeweg (410) einen außerhalb des Hauptförderweges (20) zwischen diesem und dem Bearbeitungsplatz (31) gelegenen Durchgangsabschnitt (412) aufweist, der wenigstens teilweise auch den Abgabe-Pufferabschnitt (45) bildet (Fig. 2).

11. Bearbeitungsvorrichtung nach Anspruch 10, **dadurch gekennzeichn e t,** dass der Entnahmeabschnitt (411), der Durchgangsabschnitt (412) mit dem Abgabe-Pufferabschnitt (45) und der Abgabeabschnitt (421) des Abförderwegs (22) in zum Hauptförderweg (21) quer gerichteter Reihe angeordnet sind (Fig. 2).

12. Bearbeitungsvorrichtung nach einem der Ansprüche 1 bis 8, **dadurch ge- kennzeichnet,** dass der Abförderweg (22) ein von dem Hauptförderweg (20) getrennter Weg ist, wobei der Hauptförderweg (20) und der Abförderweg (22) in unterschiedlichen Höhenebenen liegen (Fig. 6).

13. Bearbeitungsvorrichtung nach einem der Ansprüche 1 bis 12, **dadurch gekennzeichnet, dass** die Querfördermittel-Schwenkachse (50) seitlich neben dem Abförderweg (22) zu diesem mit einem Abstand (D) angeordnet ist, dem die Dimension eines Raums entspricht, in dem wenigstens ein Teil des Abgabe-Pufferabschnitts (45) eingerichtet ist (Fig. 2).

14. Bearbeitungsvorrichtung nach einem der Ansprüche 1 bis 13, **dadurch gekennzeichnet, dass** der Abgabe-Pufferabschnitt (45) mit einem den Abgabeweg (420) verlängernden Abgabeteil (450) ausgebildet ist, das von dem Abgabe-Pufferabschnitt (45) abgeförderte Nahrungsmittelprodukte (9, 92) aufnimmt (Fig. 5).

15. Bearbeitungsvorrichtung nach Anspruch 14, **dadurch gekennzeichnet, dass** das Abgabeteil (450) in wenigstens zwei Positionen setzbar ist, die Schwenkpositionen des Entnahmemittels (41) entsprechen.

16. Bearbeitungsvorrichtung nach Anspruch 1 bis 15, **dadurch gekennzeichnet, dass** wenigstens eines der beiden Mittel, nämlich das Entnahmemittel (41) und das Abgabemittel (42), zur Höheneinstellung auf unterschiedliche Höhenniveaus relativ zu dem Hauptförderweg (20) und zu dem Abförderweg (22) höhenverstellbar ist.

17. Bearbeitungsvorrichtung nach Anspruch 1 bis 16, **dadurch gekennzeichnet, dass** der Abgabe-Pufferabschnitt (45) zur Höheneinstellung auf unterschiedliche Höhenniveaus relativ zu dem Hauptförderweg (20) und zu dem Abförderweg (22) höhenverstellbar ist.

18. Bearbeitungsvorrichtung nach einem der Ansprüche 1 bis 17, **dadurch gekennzeichnet, dass** der gesamte Abgabe-Pufferabschnitt (45) quer zu dem Hauptförderweg (20) und zu dem Abförderweg (22) in wenigstens zwei fixe Positionen bewegbar ist.

19. Bearbeitungsvorrichtung nach einem der Ansprüche 1 bis 18, **dadurch gekennzeichnet, dass** dem Abgabe-Pufferabschnitt (45) eine Messeinrichtung (6, 63) zugeordnet ist, die wenigstens ein Attribut, insbesondere das Gewicht, jedes bearbeiteten, in dem Abgabe-Pufferabschnitt (45) zu liegen kommenden Nahrungsmitteprodukts (9, 92) erfasst (Fig. 1).

20. Bearbeitungsvorrichtung nach einem der Ansprüche 1 bis 19, **dadurch gekennzeichnet, dass** an wenigstens einer Längsseite des Hauptförderwegs (20) der Nahrungsmittel-Bearbeitungsvorrichtung (1) in Mehrzahl eine genannte Bearbeitungsstation (3) angeordnet ist (Fig. 1).

21. Bearbeitungsvorrichtung nach einem der Ansprüche 1 bis 20, **dadurch g e - kennzeichnet,** dass die Bearbeitungsvorrichtung (1) eine Steuereinrichtung (8) umfasst, die zum Erfassen der Belegung des Abgabe-Pufferabschnitts (45) einer genannten Bearbeitungsstation (3) mit wenigstens einem abzugebenden Nahrungsmittelprodukt (9, 92) eingerichtet ist und die das Entnahmemittel (41) und das Abgabemittel (42), die beide um die gemeinsame Querfördermittel-Schwenkachse (50) schwenkbar sind, in Abhängigkeit von dem Auftreten eines der Bearbeitungsstation (3) zum Bearbeiten zugeordneten genannten Nahrungsmittelprodukts (9) zu der Entnahme und zu der Abgabe betätigt.

22. Verfahren, eingerichtet zum Bearbeiten von in einem Produktstrom längs eines Hauptförderweges (20) geförderten Nahrungsmittelprodukten (9), die insbesondere mittels wenigstens einer Nahrungsmittel-Bearbeitungsvorrichtung (1) nach einem der Ansprüche 1 bis 21 bearbeitet werden, wobei ausgewählte Nahrungsmittelprodukte (9, 91) an wenigstens einer Bearbeitungsstation (3) mittels eines maschinellen Entnahmemittels (41) über einen quer zu dem Hauptförderweg (20) gerichteten Entnahmeweg (410) dem Hauptförderweg (20) entnommen und zu einem zu der Bearbeitungsstation (3) zugehörigen Bearbeitungsplatz (31) bewegt und dort bearbeitet werden und dann die bearbeiteten Nahrungsmittelprodukte (9, 92) zu einem Abförderweg (22) mittels eines maschinellen Abgabemittels (42) über einen Abgabeweg (420) bewegt werden, **dadurch gekennzeich**n e t, dass das Entnahmemittel (41) und das Abgabemittel (42) zum Ausführen einer Entnahmeförderung und einer Abgabeförderung der genannten Nahrungsmittelprodukte (9, 91, 92) um eine gemeinsame Querfördermittel-Schwenkachse (50) eines Querfördermittels (4) hin und her bewegt werden, wobei die bearbeiteten Nahrungsmittelprodukte (9, 92) vor dem Ausführen der Abgabeförderung in einen Abgabe-Pufferabschnitt (45) gegeben werden, von dem sie durch Ausführung der genannten Abgabeförderung mittels des Abgabemittels (41) dem Abförderweg (22) zugeführt werden.

23. Verfahren nach Anspruch 22, **dadurch gekennzeichnet, dass** die Entnahmeförderung und die Abgabeförderung der Nahrungsmittelprodukte (9) in einem Raumbereich (44) durchgeführt werden, in dem der Entnahmeweg (410) und der Abgabeweg (420) wenigstens teilweise einander überlappen.

24. Verfahren nach Anspruch 23, **dadurch gekennzeichnet, dass** die Entnahmeförderung und die Abgabeförderung der Nahrungsmittelprodukte (9) derart ausgeführt werden, dass sich der Entnahmeweg (410) und der Abgabeweg (420) auf ein und demselben Höhenniveau in einem den beiden Wegen gemeinsamen Überlappungsabschnitt (43) überlappen.

25. Verfahren nach einem der Ansprüche 22 bis 24, **dadurch gekennzeichnet, dass** die Schwenkbewegung des Entnahmemittels (41) zur Entnahme und die Schwenkbewegung des Abgabemittels (42) zur Abgabe der Nahrungsmittelprodukte (9) um die gemeinsame Querfördermittel-Schwenkachse (50) in einem gemeinsamen Drehwinkelbereich gegensinnig durchgeführt werden.

26. Verfahren nach einem der Ansprüche 22 bis 25, **dadurch gekennzeichnet, dass** die bearbeiteten Nahrungsmittelprodukte (9, 92) in einen genannten Abgabe-Pufferabschnitt (45) gegeben werden, der sich wenigstens teilweise in einem Überlappungs-Raumbereich (44) des Entnahmewegs (410) und des Abgabewegs (420) befindet.

27. Verfahren nach einem der Ansprüche 22 bis 26, **dadurch gekennzeichn e t,** dass das Entnahmemittel (41) in eine dem Abschluss der Entnahmeförderung der Nahrungsmittelprodukte (9, 91) zugeordnete Ruheposition gebracht wird, zwischen der und dem Abförderweg (22) ein den Abgabe-Pufferabschnitt (45) umfassender Raum entsteht.

28. Verfahren nach einem der Ansprüche 22 bis 27, **dadurch gekennzeichnet, dass** an wenigstens einer genannten Bearbeitungsstation die Abgabe von wenigstens einem genannten bearbeiteten Nahrungsmittelprodukt (9, 92) an den Abförderweg (22) mit der Entnahme eines genannten Nahrungsmittelprodukts (9, 91) von dem Hauptförderweg (20) derart gekoppelt und koordiniert wird, dass die Abgabeförderung dann durchgeführt wird, wenn die Entnahmeförderung für wenigstens ein bestimmtes genanntes Nahrungsmittelprodukt (9) durchgeführt wird.

29. Verfahren nach Anspruch 28, **dadurch gekennzeichnet, dass** die bearbeiteten, im Abgabe-Pufferabschnitt (45) befindlichen Nahrungsmittelprodukte (9, 92) mittels eines verlängerten Abgabeweges (420) nach dem Beginn oder nach einer Einleitungsphase der Entnahmeförderung zeitlich verzögert an den Abförderweg (22) gegeben werden.

30. Verfahren nach einem der Ansprüche 22 bis 29, **dadurch gekennzeichnet, dass** das Entnahmemittel (41) und das Abgabemittel (42) wenigstens in einem Zeitabschnitt um die gemeinsame Querfördermittel-Schwenkachse (50) geschwenkt werden.

31. Verfahren nach einem der Ansprüche 22 bis 30, **dadurch gekennzeichnet, dass** die Schwenkbewegungen des Entnahmemittels (41) und des Abgabemittels (42) um die gemeinsame Querfördermittel-Schwenkachse (50) wenigstens teilweise zeitversetzt durchgeführt werden.

32. Verfahren nach einem der Ansprüche 22 bis 31, **dadurch gekennzeichnet, dass** die Entnahmeförderung und die Abgabeförderung mittels wenigstens eines um die gemeinsame Querfördermittel-Schwenkachse (50) hin und her schwenkbaren Armelements (5) durchgeführt werden.

## Claims

1. Food processing apparatus (1), comprising a main conveyor means (21) conveying food products (9) in a product stream along a main conveying path (20) and a discharge conveyor means (23) conveying away processed food products (9) along a discharge conveying path (22) and at least one processing station (3), which has a processing area (31) arranged laterally beside the main conveying path (20) with a removal means (41), which removes from the product stream food products (9, 91) to be processed from a removal section (411) of the main conveying path (20) and transfers them to the processing area (31) via a removal path (410) transverse to the main conveying path (20), as well as with a delivery means (42), which delivers food products (9, 92) processed in the processing area (31) via a delivery path (420) to a delivery section (421) of the discharge conveying path (22), **characterized in that** a transverse conveyor means (4) is equipped with a common pivot axis (50) for the removal means (41) and the delivery means (42), about which pivot axis the removal means (41) as well as the delivery means (42) are pivotable to and fro through a pivoting movement for removal and delivery of said food products (9, 91, 92), and **in that** a delivery buffer section (45) is set up, which is designed to receive the processed food products (9, 92) intended for delivery to the delivery section (421), and which is assigned to the delivery means (42) pivotable about the common transverse conveyor means pivot axis (50), wherein the removal means (41) that is pivotable about the common transverse conveyor means pivot axis (50) covers the removal section (411) for removal of the food products (9, 91) and the delivery means (42) that is pivotable about the common transverse conveyor means pivot axis (50) covers the delivery buffer section (45) for delivery of the food products (9, 92) to the delivery section (421).

2. Processing apparatus according to claim 1, **characterized in that** the removal means (41) and the delivery means (42) are pivotable in opposite directions about the common transverse conveyor means pivot axis (50).

3. Processing apparatus according to claim 1 or 2, **characterized in that** the removal path (410) and the delivery path (420) spatially overlap at least partially (Fig. 2, Fig. 4, Fig. 5).

4. Processing apparatus according to any one of claims 1 to 3, **characterized in that** the removal means (41) and the delivery means (42) are formed by a single actuation element (51) pivotable to and fro about the transverse conveyor means pivot axis (50), the single actuation element (51) forming the removal means (41) during the outward movement and the delivery means (42) during the return movement (Fig. 2).

5. Processing apparatus according to claim 4, **characterized in that** the single actuation element (51) is height-adjustable relative to the main conveying path (20) and to the discharge conveying path (22), wherein it forms the removal means (41) at a first height level and the delivery means (42) at a second height level.

6. Processing apparatus according to any one of claims 1 to 3, **characterized in that** the removal means (41) and the delivery means (42) are formed by two separate actuation elements pivotable about the transverse conveyor means pivot axis (50), namely by a removal actuation element (52), which is assigned to a first height level, and by a delivery actuation element (53), which is assigned to a second height level (Fig. 4; Fig. 5).

7. Processing apparatus according to claim 6, **characterized in that** the removal actuation element (52) and the delivery actuation element (53) are jointly pivotable to and fro, namely in a rotationally fixed manner, about the transverse conveyor means pivot axis (50) (Fig. 4; Fig. 5).

8. Processing apparatus according to claim 6, **characterized in that** the removal actuation element (52) and the delivery actuation element (53) are separately pivotable to and fro, namely with respectively independent rotational movement, about the transverse conveyor means pivot axis (50).

9. Processing apparatus according to any one of claims 1 to 8, **characterized in that** the discharge conveying path (22) is part of the main conveying path (20) (Fig. 2, Fig. 4).

10. Processing apparatus according to claim 9, **characterized in that** the removal path (410) has a passage way section (412) situated outside the main conveying path (20) between it and the processing area (31), said passage way section (412) also at least partially forming the delivery buffer section (45) (Fig. 2).

11. Processing apparatus according to claim 10, **characterized in that** the removal section (411), the passage way section (412) comprising the delivery buffer section (45) and the delivery section (421) of the discharge conveying path (22) are arranged in series transversally to the main conveying path (21) (Fig. 2).

12. Processing apparatus according to any one of claims 1 to 8, **characterized in that** the discharge conveying path (22) is a path separated from the main conveying path (20), wherein the main conveying path (20) and the discharge conveying path (22) are at different height levels (Fig. 6).

13. Processing apparatus according to any one of claims 1 to 12, **characterized in that** the transverse conveyor means pivot axis (50) is arranged laterally beside the discharge conveying path (22) at a distance (D) from it, said distance corresponding to the dimension of a space, in which at least a part of the delivery buffer section (45) is set up (Fig. 2).

14. Processing apparatus according to any one of claims 1 to 13, **characterized in that** the delivery buffer section (45) is designed with a delivery part (450) extending the delivery path (420), said delivery part (450) receiving food products (9, 92) discharged from the delivery buffer section (45) (Fig. 5).

15. Processing apparatus according to claim 14, **characterized in that** the delivery part (450) can be set in at least two positions corresponding to the pivoting positions of the removal means (41).

16. Processing apparatus according to any one of claims 1 to 15, **characterized in that** at least one of the said means, namely the removal means (41) and the delivery means (42) are height adjustable for adjustment to different height levels relative to the main conveying path (20) and to the discharge conveying path (22).

17. Processing apparatus according to any one of claims 1 to 16, **characterized in that** the delivery buffer section (45) is height adjustable for adjustment to different height levels relative to the main conveying path (20) and to the discharge conveying path (22).

18. Processing apparatus according to any one of claims 1 to 17, **characterized in that** the entire delivery buffer section (45) is movable transversally to the main conveying path (20) or respectively to the discharge conveying path (22) into at least two fixed positions.

19. Processing apparatus according to any one of claims 1 to 18, **characterized in that** a weighing device (6, 63) registering at least one attribute, in particular the weight of each processed food product (9, 92) that arrives in the delivery buffer section (45) is assigned to said delivery buffer section (45) (Fig. 1).

20. Processing apparatus according to any one of claims 1 to 19, **characterized in that** a plurality of said processing stations (3) are arranged on at least one longitudinal side of the main conveying path (20) of the food processing apparatus (1) (Fig. 1).

21. Processing apparatus according to any one of claims 1 to 20, **characterized in that** the processing apparatus (1) comprises a control device (8), which is designed to sense occupation of the delivery buffer section (45) of said processing station (3) with at least one food product (9, 92) to be delivered and, for removal and delivery, controls the removal means (41) and the delivery means (42), which are both pivotable about the common transverse conveyor means pivot axis (50), depending on the presence of said food product (9) assigned to the processing station (3) for processing.

22. Method adapted for the processing of food products (9) conveyed in a product stream along a main conveying path (20), which are processed in particular by means of at least one food processing apparatus (1) according to any one of claims 1 to 21, wherein selected food products (9, 91) at at least one processing area (31) of an associated processing station (3) are removed from the main conveying path (20) by means of an automatic removal means (41) via a removal path (410) transversally to the main conveying path (20) and moved to a processing area (31) belonging to the processing station (3), processed there and then the processed food products (9, 92) are moved to a discharge conveying path (22) by means of an automatic delivery means (42) via a delivery path (420), **characterized** i n that the removal means (41) and the delivery means (42) are moved to and fro for removal conveyance and delivery conveyance of said food products (9, 91, 92) about a common transverse conveyor means pivot axis (50) of a transverse conveyor means (4), wherein the processed food products (9, 92) are fed into a delivery buffer section (45) before performing the delivery conveying process, from which they are fed to the discharge conveying path (22) by execution of said delivery conveying process by the delivery means (41).

23. Method according to claim 22, **characterized in that** the removal conveyance and the delivery conveyance of the food products (9) are performed in a spatial area (44), in which the removal path (410) and the delivery path (420) overlap each other at least partially.

24. Method according to claim 23, **characterized in that** removal conveyance and delivery conveyance of the food products (9) are performed such that the removal path (410) and the delivery path (420) overlap at one and the same height level in an overlapping section (43).

25. Method according to any one of claims 22 to 24, **characterized in that** the pivoting movement of the removal means (41) for removal and of the delivery means (42) for delivery of the food products (9) are performed in opposite directions about the common transverse conveyor means pivot axis (50) in a common rotational angle range.

26. Method according to any one of claims 22 to 25, **characterized in that** the processed food products (9, 92) are fed to said delivery buffer section (45), which is at least partially located in the overlapping spatial area (44) of the removal path (410) and of the delivery path (420).

27. Method according to any one of claims 22 to 26, **characterized in that** the removal means (41) is brought into a resting position associated with completion of the removal conveying process of the food products (9, 91), a space comprising the delivery buffer section (45) being created between said resting position and the discharge conveying path (22).

28. Method according to any one of claims 22 to 27, **characterized in that**, at at least one said processing station, the delivery of at least one said processed food product (9, 92) to the discharge conveying path (22) is coupled and coordinated with the removal of a said food product (9, 91) from the main conveying path (20) in such a way that the delivery conveying process is performed when the removal process is performed for at least one particular said food product (9).

29. Method according to claim 28, **characterized in that** the processed food products (9, 92) present in the delivery buffer section (45) are fed to the discharge conveying path (22) by means of an extended delivery path (420) with a time delay after the start of or after an initiation phase of the removal conveying process.

30. Method according to any one of claims 22 to 29, **characterized in that** the removal means (41) and the delivery means (42) are pivoted about the common transverse conveyor means pivot axis (50) within at least one common time period.

31. Method according to any one of claims 22 to 30, **characterized in that** the pivoting movements of the removal means (41) and the delivery means (42) about the common transverse conveyor means pivot axis (50) are at least partially performed at different times.

32. Method according to any one of claims 22 to 31, **characterized in that** the removal conveying process and the delivery conveying process are performed by means of at least one arm element (5) pivotable to and fro about the common transverse conveyor means pivot axis (50).

## Revendications

1. Dispositif de traitement d'aliments (1), comprenant un moyen transporteur principal (21) transportant des denrées alimentaires (9) dans un flux de produits le long d'un circuit de transport principal (20) de même qu'un moyen d'évacuation (23) évacuant des denrées alimentaires traitées (9, 92) le long d'un circuit d'évacuation (22) et au moins une station de traitement (3), qui présente un poste de traitement (31) disposé sur le côté latérale du circuit de transport principal (20), dispositif pourvu d'un moyen d'extraction (41), permettant d'extraire du flux de produit les denrées alimentaires (9, 91) à traiter à partir d'une zone d'extraction (411) du circuit de transport principal (20) et de transmettre lesdites denrées au poste de traitement (31) par l'intermédiaire d'un circuit d'extraction (410) perpendiculaire au circuit de transport principal (20) de même que d'un moyen de transfert (42) permettant de transférer à une zone de transfert (421) du circuit d'évacuation (22) les denrées alimentaires (9, 92) traitées au niveau du poste de traitement (31), **caractérisé en ce qu'**un moyen de transport perpendiculaire (4) dispose d'un axe pivotant commun (50) pour le moyen d'extraction (41) et pour le moyen de transfert (42), axe par rapport auquel le moyen d'extraction (41) de même que le moyen de transfert (42) peuvent aller et venir par un mouvement pivotant pour extraire et transférer les denrées alimentaires mentionnées (9, 91, 92), et **en ce qu'**une zone d'accumulation de transfert (45) est agencée, permettant la prise en charge de certaines denrées alimentaires (9, 92) traitées, pour transfert à la zone de transfert (421) et qui est associé au moyen de transfert (42) pivotant par rapport à l'axe pivotant (50) du moyen de transport perpendiculaire commun, où le moyen d'extraction (41) pivotant par rapport à l'axe pivotant (50) du moyen de transport perpendiculaire commun pour l'extraction des denrées alimentaires (9, 91) contient la zone d'extraction (411) et le moyen de transfert (42) pivotant par rapport à l'axe pivotant (50) du moyen de transport perpendiculaire commun pour assurer le transfert des denrées alimentaires (9, 92) à la zone de transfert (421) et la zone d'accumulation de transfert (45).

2. Dispositif de traitement selon la revendication 1, **caractérisé en ce que** le moyen d'extraction (41) et le moyen de transfert (42) sont pivotants dans la direction opposée par rapport à l'axe pivotant (50) du moyen de transport perpendiculaire commun.

3. Dispositif de traitement selon la revendication 1 ou la revendication 2, **caractérisé en ce que** le circuit d'extraction (410) et le circuit de transfert (420) se chevauchent au moins partiellement dans l'espace (Fig. 2, Fig. 4, Fig. 5)

4. Dispositif de traitement selon l'une des revendications 1 à 3, **caractérisé en ce que** le moyen d'extraction (41) et le moyen de transfert (42) sont constitués d'un seul élément de commande (51) pivotant dans les deux sens par rapport à l'axe pivotant (50) du moyen de transport perpendiculaire commun, élément de commande formant le moyen d'extraction (41) dans un mouvement aller et le moyen de transfert (42) dans un mouvement de retour (Fig. 2).

5. Dispositif de traitement selon la revendication 4, **caractérisé en ce que** le seul élément de commande (51) est réglable en hauteur par rapport au circuit de transport principal (20) et au circuit d'évacuation (22), où il forme le moyen d'extraction (41) dans un premier niveau de hauteur et le moyen de transfert (42) dans un second niveau de hauteur.

6. Dispositif de traitement selon l'une des revendications 1 à 3, **caractérisé en ce que** le moyen d'extraction (41) et le moyen de transfert (42) sont constitués de deux éléments de commande séparés pivotant dans les deux sens par rapport à l'axe pivotant (50) du moyen de transport perpendiculaire commun, à savoir grâce à un élément de commande d'extraction (52) qui est associé à un premier niveau de hauteur, de même qu'un élément de commande de transfert (53), qui est associé à un second niveau de hauteur (Fig. 4; Fig. 5).

7. Dispositif de traitement selon la revendication 6, **caractérisé en ce que** l'élément de commande d'extraction (52) et l'élément de commande de transfert (53) peuvent pivoter dans les deux sens, en commun à savoir en liaison bloquée en rotation l'un avec l'autre, par rapport à l'axe de pivotement du moyen de transport perpendiculaire (50) (Fig. 4; Fig. 5).

8. Dispositif de traitement selon la revendication 6, **caractérisé en ce que** l'élément de commande d'extraction (52) et l'élément de commande de transfert (53) peuvent pivoter dans les deux sens, séparément l'un de l'autre, à savoir avec un mouvement de rotation indépendant par rapport à l'axe de pivotement du moyen de transport perpendiculaire (50).

9. Dispositif de traitement selon l'une des revendications 1 à 8, **caractérisé en ce que** le circuit d'évacuation (22) est partie intégrante du circuit de transport principal (20) (Fig. 2, Fig. 4).

10. Dispositif de traitement selon la revendication 9, **caractérisé en ce que** le circuit d'extraction (410) présente une zone de transition (412) extérieur au circuit de transport principal (20) entre celui-ci et le poste de traitement (31), zone de transition formant au moins partiellement la zone d'accumulation de transfert (45) (Fig. 2).

11. Dispositif de traitement selon la revendication 10, **caractérisé en ce que** la zone d'extraction (411), la zone de transition (412) (412) avec la zone d'accumulation de transfert (45) et la zone de transfert (421) du circuit d'évacuation (22) aménagés en série perpendiculaire au circuit de transport principal (21) (Fig. 2).

12. Dispositif de traitement selon l'une des revendications 1 à 8, **caractérisé en ce que** le circuit d'évacuation (22) est un circuit séparé du circuit de transport principal (20),où le circuit de transport principale (20) et le circuit d'évacuation (22) sont dans différents niveaux en hauteur (Fig. 6).

13. Dispositif de traitement selon l'une des revendications 1 à 12, **caractérisé en ce que** l'axe de pivotement du moyen de transport perpendiculaire (50) est agencé latéralement à côté du circuit d'évacuation (22) avec un intervalle (D) par rapport à celui-ci, qui correspond à un espace dans lequel au moins une partie de la zone d'accumulation de transfert (45) est agencée (Fig. 2).

14. Dispositif de traitement selon l'une des revendications 1 à 13, **caractérisé en ce que** la zone d'accumulation de transfert (45) est constitué d'une partie de transfert (450) prolongeant le circuit de transfert (420), qui prend en charge les denrées alimentaires (9, 92) transférées par la zone d'accumulation de transfert (45) (Fig. 5).

15. Dispositif de traitement selon la revendication 14, **caractérisé en ce que** la partie transfert (450) peut adopter au moins deux positions correspondant aux positions pivotantes du moyen d'extraction (41).

16. Dispositif de traitement selon l'une des revendications 1 à 15, **caractérisé en ce qu'**au moins l'un des deux moyens, à savoir le moyen d'extraction (41) et le moyen de transfert (42), est réglable en hauteur par rapport au circuit de transport principal (20) et au circuit d'évacuation (22) à différents niveaux en hauteur.

17. Dispositif de traitement selon l'une des revendications 1 à 16, **caractérisé en ce que** la zone d'accumulation de transfert (45) est réglable en hauteur par rapport au circuit de transport principal (20) et au circuit d'évacuation (22) à différents niveaux en hauteur.

18. Dispositif de traitement selon l'une des revendications 1 à 17, **caractérisé en ce que** toute la zone d'accumulation de transfert (45) est mobile perpendiculairement par rapport au circuit de transport principal (20) et au circuit d'évacuation (22) pour adopter au moins deux positions fixes.

19. Dispositif de traitement selon l'une des revendications 1 à 18, **caractérisé en ce qu'**un dispositif de mesure (6, 63) est associé à la zone d'accumulation de transfert (45), dispositif comprenant au moins un attribut, en particulier le poids, de chaque denrée alimentaire (9, 92) traitée et parvenant à la zone d'accumulation de transfert (45) (Fig. 1).

20. Dispositif de traitement selon l'une des revendications 1 à 19, **caractérisé en ce qu'**une station de traitement (3) mentionnée est agencée au moins sur un côté longitudinal du circuit de transport principal (20) du dispositif de traitement d'aliments (1) en plusieurs exemplaires (Fig. 1).

21. Dispositif de traitement selon l'une des revendications 1 à 20, **caractérisé en ce que** le dispositif de traitement (1) comporte un dispositif de commande (8), dispositif de commande agencé pour détection l'occupation de la zone d'accumulation de transfert (45) d'une station de traitement mentionnée (3) avec au moins une denrée alimentaire (9, 92) à transférer et qui actionne le moyen d'extraction (41) et le moyen de transfert (42), qui sont tous deux pivotants par rapport à l'axe pivotant (50) du moyen de transport perpendiculaire commun, en fonction de la survenance d'un de la station de traitement (3) pour traiter une denrée alimentaire mentionnée (9) affectée au traitement pour l'extraction et pour le transfert.

22. Procédé, agencé pour traiter des denrées alimentaires (9) transportées le long d'un circuit de transport principal (20) depuis un flux de produit, denrées traitées en particulier au moyen d'au moins un dispositif de traitement d'aliments (1) selon l'une des revendications 1 à 21, où des denrées alimentaires sélectionnées (9, 91) sont extraites du circuit de transport principal (20) au niveau d'au moins une station de traitement (3) au moyen d'un moyen d'extraction mécanique (41) par le biais d'un circuit d'extraction (410) orienté perpendiculaire au circuit de transport principal (20) et sont déplacés et traités dans un poste de traitement (31) appartenant à la station de traitement (3) et les denrées alimentaires traitées (9, 92) sont déplacées par rapport à un circuit d'évacuation (22) à l'aide d'un moyen de transfert mécanique (42) par le biais d'un circuit de transfert (420), **caractérisé en ce que** le moyen d'extraction (41) et le moyen de transfert (42) vont et viennent par rapport à l'axe de pivotement de moyen de transport perpendiculaire commun (50) d'un moyen de transport perpendiculaire (4) pour exécuter un transport d'extraction et un transport de transfert des denrées alimentaires mentionnées (9, 91, 92), où les denrées alimentaires traitées (9, 92) sont transmises à une zone d'accumulation de transfert (45) avant d'exécuter le transport de transfert, zone d'accumulation de transfert (45) depuis laquelle les denrées sont acheminées au circuit d'évacuation (22) en exécutant le transport de transfert mentionné à l'aide du moyen de transfert (41).

23. Procédé selon la revendication 22, **caractérisé en ce que** le transport d'extraction et le transport de transfert des denrées alimentaires (9) sont réalisés dans une zone spatiale (44), dans laquelle le circuit d'extraction (410) et le circuit de transfert (420) se chevauchent au moins partiellement.

24. Procédé selon la revendication 23, **caractérisé en ce que** le transport d'extraction et le transport de transfert des denrées alimentaires (9) sont réalisés de telle sorte que le circuit d'extraction (410) et le circuit de transfert (420) se chevauchent sur le même seul et unique niveau dans une zone de chevauchement (43) commun aux deux circuits.

25. Procédé selon l'une des revendications 22 à 24, **caractérisé en ce que** le mouvement de pivotement du moyen d'extraction (41) pour extraire et le mouvement de pivotement du moyen de transfert (42) pour transférer les denrées alimentaires (9) par rapport à l'axe de pivotement (50) du moyen de transport perpendiculaire commun sont réalisés en sens opposés dans une zone angulaire rotative commune.

26. Procédé selon l'une des revendications 22 à 25, **caractérisé en ce que** les denrées alimentaires traitées (9, 92) sont transmises dans une zone d'accumulation de transfert (45) mentionnée, zone d'accumulation située au moins partiellement dans une zone spatiale de chevauchement (44) du circuit d'extraction (410) et du circuit de transfert (420).

27. Procédé selon l'une des revendications 22 à 26, **caractérisé en ce que** le moyen d'extraction (41) est amené dans une position de repos agencée au bout de transport d'extraction des denrées alimentaires (9, 91), où un espace contenant la zone d'accumulation de transfert (45) est créé entre ladite position de repos et le circuit d'évacuation (22).

28. Procédé selon l'une des revendications 22 à 27, **caractérisé en ce que** le transfert au niveau d'au moins une station de traitement mentionnée, d'au moins une denrée alimentaire traitée (9, 92) mentionnée vers le circuit d'évacuation (22) avec l'extraction d'une denrée alimentaire mentionnée (9, 91) à partir du circuit de transport principal (20) est accouplé et coordonné de telle sorte que le transport de transfert est réalisé lorsque le transport d'extraction est exécuté pour au moins une certaine denrée alimentaire mentionnée (9).

29. Procédé selon la revendication 28, **caractérisé en ce que** les denrées alimentaires (9, 92) situées dans la zone d'accumulation de transfert (45) sont transmises au circuit d'évacuation (22) à l'aide d'un circuit de transfert prolongé (420) après le début ou après une phase d'introduction du transport d'extraction avec une temporisation.

30. Procédé selon l'une des revendications 22 à 29, **caractérisé en ce que** le moyen d'extraction (41) et le moyen de transfert (42) pivotent au moins dans une fenêtre de temps par rapport à l'axe pivotant (50) du moyen de transport perpendiculaire commun.

31. Procédé selon l'une des revendications 22 à 30, **caractérisé en ce que** les mouvements de pivotement du moyen d'extraction (41) et du moyen de transfert (42) sont décalés dans le temps au moins partiellement par rapport à l'axe pivotant (50) du moyen de transport perpendiculaire commun.

32. Procédé selon l'une des revendications 22 à 31, **caractérisé en ce que** le transport d'extraction et le transport de transfert sont réalisés à l'aide au moins d'un élément de bras pivotant (5) dans les deux sens par rapport à l'axe pivotant (50) du moyen de transport perpendiculaire commun.
